(19) Europäisches Patentamt
European Patent Office
Office européen des brevets

(11) Veröffentlichungsnummer : **0 086 746**
**B1**

(12) **EUROPÄISCHE PATENTSCHRIFT**

(45) Veröffentlichungstag der Patentschrift : **30.07.86**

(21) Anmeldenummer : **83810050.1**

(22) Anmeldetag : **07.02.83**

(51) Int. Cl.⁴ : **A 01 N 25/32**, C 07 C103/38, C 07 C103/375, A 01 N 39/04 // (A01N25/32, 39:04, 33:18, 37:10, 37:22, 43:40, 43:48, 43:64, 43:82, 47:10, 47:30, 47:36, 57:16)

(54) **Phenylamino-oxo-essigsäure und deren Ester als Herbizid-Gegenmittel zum Schutz von Kulturpflanzen.**

(30) Priorität : **11.02.82 CH 854/82**

(43) Veröffentlichungstag der Anmeldung : **24.08.83 Patentblatt 83/34**

(45) Bekanntmachung des Hinweises auf die Patenterteilung : **30.07.86 Patentblatt 86/31**

(84) Benannte Vertragsstaaten : **BE CH DE FR GB IT LI NL**

(56) Entgegenhaltungen :
**DE-B- 1 567 075**
**FR-A- 2 389 324**

(73) Patentinhaber : **CIBA-GEIGY AG**
**Klybeckstrasse 141**
**CH-4002 Basel (CH)**

(72) Erfinder : **Breitenstein, Werner, Dr.**
**St. Galler-Ring 179**
**CH-4054 Basel (CH)**
Erfinder : **Föry, Werner, Dr.**
**Benkenstrasse 65**
**CH-4054 Basel (CH)**
Erfinder : **Nyfeler, Robert, Dr.**
**Bärenfelserstrasse 8**
**CH-4057 Basel (CH)**
Erfinder : **Böger, Manfred**
**Wilhelm Glock-Strasse 14**
**D-7858 Weil am Rhein 5 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 086 746 B1**

Jouve, 18, rue St-Denis, 75001 Paris, France

## Beschreibung

Die vorliegende Erfindung betrifft ein Mittel und ein Verfahren zur selektiven Unkrautbekämpfung in Nutzpflanzen, in dem ein Herbizid und ein Gegenmittel, welches die Kulturpflanzen vor der phytotoxischen Wirkung des Herbizides schützt, zusammen verwendet werden. Dabei werden Phenylamino-oxo-essigsäuren der untenstehenden Formel I und deren Ester, gleichzeitig oder in kurzer Folge mit dem Herbizid auf die Kulturpflanzen appliziert oder es wird ein Mittel, welches neben dem Herbizid noch eine Phenylamino-oxo-essigsäure oder einen Ester davon, entsprechend der Formel I enthält, appliziert. Die Erfindung beinhaltet auch die Mittel, welche Phenylamino-oxo-essigsäure der Formel I und deren Ester enthalten.

Die Phenylamino-oxo-essigsäure und deren Ester entsprechen der Formel I

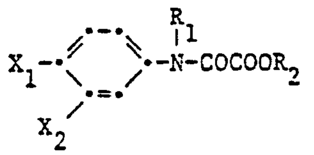

(I)

worin

$X_1$ und $X_2$ unabhängig voneinander je Halogen oder Halogenmethoxy oder eines davon auch Wasserstoff,

$R_1$ Wasserstoff oder $C_1$-$C_4$ Alkyl und

$R_2$ Wasserstoff, einen unsubstituierten $C_1$-$C_{18}$ Alkyl-, $C_3$-$C_{18}$-Alkenyl, $C_3$-$C_6$ Alkinyl- oder $C_3$-$C_8$ Cycloalkylrest ;

einen $C_1$-$C_6$ Alkyl-, $C_3$-$C_6$ Alkenyl- oder $C_3$-$C_8$ Cycloalkylrest, welcher durch einen Rest [$C_2$-$C_3$ Alkylen O]$_n$R', worin n 1 oder 2 und R' Wasserstoff oder $C_1$-$C_6$ Alkyl bedeuten, oder einen Rest $C_1$-$C_6$ Alkylthio, $C_1$-$C_4$ Hydroxyalkylthio, $C_1$-$C_6$ Alkoxycarbonyl, $C_1$-$C_6$ (Alkylthio)carbonyl, $C_1$-$C_6$ Alkylcarbonyl, Amino, $C_1$-$C_6$ Alkylamino, $C_1$-$C_6$ Dialkylamino, $C_1$-$C_{18}$ Alkenylcarbonyloxy, Carbamoyl, $C_1$-$C_4$ Alkylcarbamoyl, Di-$C_1$-$C_4$-alkylcarbamoyl oder Phenyl substituiert ist, wobei der Phenylrest seinerseits durch Halogen, Cyan, $C_1$-$C_6$ Alkyl, $C_1$-$C_6$ Haloalkyl, $C_1$-$C_6$ Alkoxy, $C_1$-$C_6$ Alkylthio, $C_1$-$C_6$ Alkylcarbonyl oder Nitro substituiert sein kann ; oder $R_2$ ein Phenyl-$C_3$-$C_6$-alkinylrest der im Phenylring wie oben substituiert sein kann.

Der Ausdruck Alkyl allein oder als Teil eines Substituenten umfasst verzweigte oder unverzweigte Alkylgruppen, welche die angegebene Anzahl Kohlenstoffatome enthalten. Beispiele sind Methyl, Aethyl, Propyl, Isopropyl, Butyl, Isobutyl, sec. Butyl, tert. Butyl, sowie die höheren Monologen Amyl, Isoamyl, Hexyl, Heptyl, Octyl etc. samt ihren Isomeren. Entsprechend können die Alkenyl- oder Alkinylgruppen geradkettig oder verzweigt sein.

Cycloalkylgruppen sind Cyclopropyl, Cyclobutyl, Cyclopentyl, Cyclohexyl und weitere bis Cyclooctyl.

Die Alkenyl- und Alkinylgruppen können ebenfalls geradkettig oder verzweigt sein und eine oder mehrere ungesättigte Stellen im Radikal enthalten. Beispiele sind Allyl, Methallyl, Propargyl, Butenyl, Butadienyl, Butinyl, Butadienyl-reste sowie deren höhere Homologe.

Die Phenylamino-oxo-essigsäuren und deren Ester der Formel I eignen sich hervorragend, Kulturpflanzen vor dem Angriff von pflanzenaggressiven Agrarchemikalien, insbesondere von Herbiziden verschiedenster Stoffklassen, zu schützen, sofern diese nicht oder nicht genügend kulturtolerant sind. Als Kulturpflanzen kommen insbesondere diejenigen in Betracht, die auf dem Nahrungs- oder Textilsektor von Bedeutung sind, wie beispielsweise Kulturhirse, Reis, Mais, Getreidearten (Weizen, Roggen, Gerste, Hafer), Baumwolle, Zuckerrüben, Zuckerrohr und Soja.

Die Herbizide können beispielsweise zu einer der folgenden Stoffklassen gehören : Triazine und Triazinone ; Phenylharnstoffe, insbesondere 3-(4-Isopropylphenyl)-1, 1-dimethylharnstoff (« Isoproturon ») ; Carbamate und Thiocarbamate ; Halogenacetanilide, insbesondere Chloracetanilide ; Chloracetamide ; Halogenphenoxyessigsäureester ; Diphenyläther, wie beispielsweise substituierte Phenoxyphenoxyessigsäureester und -amide und substituierte Phenoxyphenoxypropionsäureester und -amide ; substituierte Pyridyloxyphenoxyessigsäureester und -amide, und substituierte Pyridyloxyphenoxypropiosäureesrer und -amide, insbesondere 2-[4-(3,5-Dichlorpyridyl-2-oxy)-phenoxy]-propionsäure-2-propinylester ; Benzoesäurederivate ; Nitroaniline ; Oxadiazolone ; Phosphate ; Pyrazole und Sulfonylharnstoffe.

Im einzelnen kommen beispielsweise folgende Substanzen in Betracht :

Triazine und Triazinone : 2,4-Bis(isopropylamino)-6-methylthio-1,3,5-triazin (« Prometryn »), 2,4-Bis(äthylamino)-6-methylthio-1,3,5-triazin (« Symetryn »), 2-(1',2'-Dimethylpropylamino)-4-äthylamino-6-methylthio-1,3,5-triazin (« Dimethametryn »), 4-Amino-6-tert.butyl-4,5-dihydro-3-methylthio-1,2,4-triazin-5-on (« Metribuzin »), 2-tert.Butylamino-4-äthylamino-6-methylthio-1,3,5-triazin (« Terbutryn »), 2-Chlor-4-tert.-butylamino-6-äthylamino-1,3,5-triazin (« Terbuthylazin »), 2-Chlor-4-isopropylamino-6-äthylamino-1,3,5-triazin (« Atrazin »), 2-tert.-butylamino-4-alkylamino-6-methoxy-1,3,5-triazin (« Terbumeton »).

Phenylharnstoffe : N-(3-Chlor-4-methylphenyl)-N',N'-dimethylharnstoff (« Chlortoluron »), N-(4-Bromphenyl)-N'-methoxy-N'-methylharnstoff (« Metobromuron »), N-(4-Brom-3-chlorphenyl)-N'-methoxy-N'-methylharnstoff (« Chlorbromuron »), N-(3,4-Dichlorphenyl)-N'-methoxy-N'-methyl-harnstoff (« linuron »), N-(4-Chlorphenyl)-N'-methoxy-N'-methylharnstoff (« Monolinuron »), N-(3-Triffluormethylphenyl)-N',N'-dimethylharnstoff (« Fluometuron »), N-(3-Chlor-4-methoxyphenyl)-N',N'-dimethylharnstoff (« metoxuron »), N-(4-Chlorphenyl)-N',N'-dimethylharnstoff (« Monuron »), N-(3,4-Dichlorphenyl)-N',N'-dimethylharnstoff (« diuron »), N-(Benzthiazol-2-yl)-N,N'-dimethylharnstoff (« Methabenzthiazuron »).

Chloracetanilide : 2-Chlor-2',6'-diäthyl-N-(2"-propyloxyäthyl) acetanilid (« propalochlor »), 2-Chlor-6'-äthyl-N-(2"-methoxy-1"-methyläthyl)-acet-o-toluidid (« Metolachlor »), 2-Chlor-2',6'-diäthyl-N-(butoxymethyl)-acetanilid (« Butachlor »), 2-Chlor-6'-äthyl-N-(äthoxymethyl)acet-o-toluidid (« Acetochlor »), 2-Chlor-6'-äthyl-N-(2"-propoxy-1"-methyläthyl) acet-o-toluidid, 2-Chlor-2', 6'-dimethyl-N-(2"-methoxy-1"-methyläthyl)acetanilid, 2-Chlor-2',6'-dimethyl-N-(2"-methoxyäthyl)acetanilid (« dimethachlor »), 2-Chlor-2'.6'-diäthyl-N-(pyrazol-1-ylmethyl)acetanilid, 2-Chlor-6'-äthyl-N-(pyrazol-1-ylmethyl)-acet-o-toluidid, 2-Chlor-6'-äthyl-N-(2"-butoxy-1"-methyläthyl)acet-o-toluidid (« Metazolachlor »), 2-Chlor-6'-äthyl-N-(2"-butoxyl-1"-(methyl-äthyl)acet-o-toluidid 2-Chlor-2'-trimethylsilyl-N-(butoxymethyl) acetanilid und 2-Chlor,2'6'-diäthyl-N-(methoxymethyl)-acetanilid (« Alachlor »).

Chloracetamide : N-[1-Isopropyl-2-methylpropan-1-yl(1)]-N-(2'-methoxyäthyl)-chloracetamid.

Diphenyläther und Nitrodiphenyläther : 2,4-Dichlorphenyl-4'-nitrophenyläthe (« Nitrofen »), 2-Chlor-1-(3'-äthoxy-4'-nitrophenoxy)-4-trifluormethyl-benzol (« Oxyfluorfen »), 2',4'-Dichlorphenyl-3-methoxy-4-nitrophenyl-äther (« Chlormethoxynil »), 2-[4'-(2",4"-Dichlorphenoxy)-phenoxy] propionsäure-methylester, N-(2'-Phenoxyäthyl)-2-[5'(2"-chlor-4"-trifluormethylphenoxy)-phenoxy]-propionsäureamid.

Benzoesäurederivate : Methyl-5-(2',4'-dichlorphenoxy)-2-nitrobenzoat (« Binefox »), 5-(2'-Chlor-4'-trifluormethylphenoxy)-2-nitrobenzoesäure (« Acifluorfen »), 2,6-Dichlorbenzonitril (« Dichlobenil »).

Nitroaniline : 2,6-Dinitro-N,N-dipropyl-4-trifluormethylanilin (« Trifluralin »), N-(1'-Aethylpropyl)-2,6-dinitro-3,4-xylidin (Pendimethalin »).

Oxadiazolone : 5-tert.-Butyl-3-(2',4'-dichlor-5'-isopropoxyphenyl)-1,3,4-oxadiazol-2-on (« Oxadiazon »).

Carbamate und Thiocarbamate : N-(3',4'-Dichlorphenyl)-propionanilid (« Propanil »). S-4-Chlorbenzyl-diäthyl-thiocarbamat (« Benthiocarb »), S-Aethyl-N,N-hexamethylen-thiocarbamat (« Molinate »), S-Aethyl-dipropyl-thiocarbamat (« EPTC »), N,N-di-sec.Butyl-S-benzyl-thiocarbamat ($^R$Drepamon), S-(2,3-Dichlorallyl)-di-isopropyl-thiocarbamat (« Diallate »), 1-(Propylthiocarbonyl)-decahydro-chinaldin, 5-Aethyl-di-isobutyl-thiocarbamat (« Butylate »).

Sulfonylharnstoffe : N-(2-Chlorphenylsulfonyl)-N'-(4-methoxy-6-methyl-1,3,5-triazin-2-yl)-harnstoff, N-(2-Methoxycarbonyl-phenylsulfonyl)-N'-(4,6-dimethyl-pyrimidin-2-yl)-harnstoff, N-(2,5-Dichlorphenylsulfonyl)-N'-(4,6-dimethoxypyrimidin-2-yl)-harnstoff oder beispielsweise auch die aus der EP-A-44 808 und 44 809 bekannten Sulfonylharnstoffe.

Phosphate : S-2-Methylpiperidino-carbonylmethyl-O,O-dipropyl-phosphorodithioat (« Piperophos »).

Pyrazole : 1,3-Dimethyl-4-(2',4'-dichlorbenzoyl)-5-(4'-tolylsulfonyloxy)-pyrazol.

Besonders geeignet sind die Verbindungen der Formel I zum Schützen von Kulturpflanzen gegen schädigende Wirkungen von Herbiziden der allgemeinen Formel II

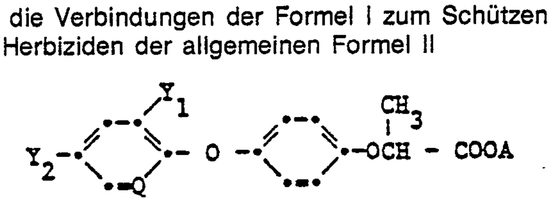

(II)

worin

$Y_1$ Wasserstoff oder Halogen,

$Y_2$ Wasserstoff, Halogen oder Trifluormethyl,

Q Stickstoff oder die Gruppe —CH=,

A $C_1$-$C_4$ Alkyl, $C_3$-$C_4$ Alkenyl, $C_3$-$C_4$ Alkinyl, $C_2$-$C_8$ Alkoxyalkyl oder einen Iminorest

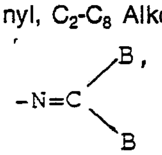

worin die B unabhängig voneinander je $C_1$-$C_4$ Alkyl oder zusammen $C_4$-$C_5$ Alkylen bedeuten.

Beispiele solcher Verbindungen sind α-[4-(4-Chlorphenoxy)-phenoxy]-propionsäure-sec.butylester, α-[4-(4-Trifluormethylphenoxy)phenoxy]propionsäure-methylester, α-[4-(2,4-Dichlorphenoxy)-phenoxy-propionsäure-methylester, α-[4-(4-Trifluormethylphenoxy)phenoxy] propionsäure-acetoxim-ester, α-[4-(5-Trifluormethylpyridyl-2-oxy)phenoxy]propionsäure, α-[4-(3,5-Dichlorpyridyl-2-oxy)phenoxy] propionsäure-Natriumsalz, α-[4-(5-Trifluormethylpyridyl-2-oxy)phenoxy]-propionsäure-n-butylester und α-[4-(3,5-Dichlorpyridyl-2-oxy)-phenoxy] propionsäure-propargylester, welche als Herbizide bekannt sind, sofern diese nicht oder ungenügend kulturentolerant sind.

Als Gegenmittel oder Antidote sind schon verschiedene Stoffe vorgeschlagen worden, welche befähigt sind, die schädigenden Wirkungen eines Herbizids auf die Kulturpflanze spezifisch zu antagonisieren, d. h. die Kulturpflanze zu schützen, ohne dabei die Herbizidwirkung auf die zu bekämpfenden Unkräuter merklich zu beeinflussen. Dabei kann ein solches Gegenmittel, auch Safener genannt, je nach seinen Eigenschaften zur Vorbehandlung des Saatgutes der Kulturpflanze (Beizung des Samens oder der Stecklinge) oder vor der Saat in die Saatfurchen oder als Tankmischung zusammen mit dem Herbizid vor oder nach dem Auflaufen der Pflanzen verwendet werden.

So beschreibt die GB-PS 1 277 557 die Behandlung von Samen bzw. Sprösslingen von Weizen und Hirse mit gewissen Oxamsäureestern und Amiden vor dem Angriff durch N-Methoxymethyl-2',6'-diäthyl-chlor-acetanilid (Alachlor). Andere Literaturstellen (DE-OS 1 952 910), DE-OS 2 245 471, FR-PS 2 021 611) schlagen Gegenmitell zur Behandlung von Getreide, Mais- und Reis-Samen zum Schutz gegen den Angriff herbizider Thiolcarbamate vor. In der DE-PS 1 576 676 und der US-PS 3 131 509 werden Hydroxyamino-acetanilide und Hydantoine für den Schutz von Getreidesamen gegenüber Carbamaten wie IPC, CIPC etc. vorgeschlagen. In der weiteren Entwicklung haben sich alle diese Präparate jedoch als ungenügend erwiesen.

Die FR-A- 2 389 342 beschreibt ein Verfahren und Mittel zur Verhinderung der Pollenbildung bei hermaphroditen Pflanzen und solchen die männliche und weibliche Blüten auf derselben Pflanze haben. Die eingesetzten Wirkstoffe sind Oxanilide mit ähnlicher und teilweise identischer chemischer Struktur wie die vorliegenden Phenylamino-oxo-essigsäuren und -ester.

Das Gegenmittel oder Antidote der Formel I kann je nach Anwendungszweck zur Vorbehandlung des Saatgutes der Kulturpflanze (Beizung des Samens oder der Stecklinge) eingesetzt oder vor oder nach der Saat in den Erdboden gegeben werden. Es kann für sich allein oder zusammen mit dem Herbizid vor oder nach dem Auflaufen der Pflanzen appliziert werden. Die Behandlung der Pflanze oder des Saatguts mit dem Antidote kann daher kurze zeit vor der Applikation der phytotoxischen Chemikalie erfolgen, sie kann jedoch auch gleichzeitig durchgeführt werden (Tankmischung). Vorauflauf-Behandlung schliesst sowohl die Behandlung der Anbaufläche vor der Aussaat (ppi = « pre plant incorporation ») als auch die Behandlung der angesäten, aber noch nicht bewachsenen Anbauflächen ein.

Die Aufwandmengen des Antidotes im Verhältnis zum Herbizid richten sich weitgehend nach der Anwendungsart. Sofern eine Feldbehandlung vorgenommen wird, entweder als Tankmischung oder bei getrennter Applikation vor Herbizid und Gegenmittel, verhalten sich die Mengen von Gegenmittel zu Herbizid wie 1 : 100 bis 1 : 1 ; bevorzugt jedoch 1 : 5.

Bei Samenbeizung und ähnlich gezielten Schutzmassnahmen werden jedoch weit geringere Mengen Gegenmittel im Vergleich mit den z. B. später pro Hektar Anbaufläche verwendeten Herbizidmengen benötigt. Bei der Samenbeizung werden pro kg Samen 0,1-10 g Gegenmittel benötigt, die bevorzugte Menge liegt zwischen 1 und 2 Gramm. Falls das Gegenmittel kurz vor der Aussaat durch Samenquellung appliziert werden soll, werden Gegenmittel-Lösungen, welche den Wirkstoff in einer Konzentration von 1-10 000 ppm enthalten, bevorzugt 100-1 000 ppm verwendet.

In der Regel stehen protektive Massnahmen wie Samenbeizung mit einem Gegenmittel der Formel I und mögliche spätere Feldbehandlung mit Agrarchemikalien nur in losem Zusammenhang. Vorbehandeltes Saat- und Pflanzengut kann später in Landwirtschaft, Gartenbau und Forstwirtschaft mit unterschiedlichen Chemikalien in Berühung kommen. Die Erfindung bezieht sich daher auf die kulturpflanzenprotektive Mittel, die als Wirkstoff ein Gegenmittel der Formel I zusammen mit üblichen Trägerstoffen enthalten. Solche Mittel können gegebenenfalls zusätzlich mit jenen Agrarchemikalien gemischt sein, vor deren Einfluss die Kulturpflanze geschützt werden soll, z. B. mit einem Herbizid.

Als Kulturpflanzen gelten im Rahmen vorliegender Erfindung alle Pflanzen, die in irgendeiner Form Ertragsstoffe produzieren (Samen, Wurzeln, Stengel, Knollen, Blätter, Blüten, Inhaltsstoffe wie Oele, Zucker, Stärke, Eiweiss etc.) und zu diesem Zweck angebaut und gehegt werden. Zu diesen Pflanzen gehören beispielsweise sämtliche Getreidearten, Weizen, Roggen, Gerste, Hafer daneben vor allem Reis, Kulturhirse, Mais aber auch Baumwolle, Zuckerrüben, Zuckerrohr, Soja, Bohnen, Erbsen.

Diese Aufzählung stellt keine Limitierung dar. Grundsätzlich lässt sich ein Gegenmittel überall dort einsetzen, wo eine Kulturpflanze vor der Phytotoxizität einer Chemikalie geschützt werden soll.

Die Erfindung bezieht sich auf das Verfahren zum Schutz von Kulturpflanzen vor aggressiven Herbiziden, wobei die als Gegenmittel wirkende Phenylamino-oxo-essigsäure oder deren Ester wahlweise kurze Zeit vor der Applikation der Agrarchemikalie oder auch gleichzeitig mit der Agrarchemikalie angewendet wird.

Die Erfindung bezieht sich ferner auf das Vermehrungsgut solcher Kulturpflanzen, das protektiv mit einem Gegenmittel der Formel I behandelt wurde. Unter dem Begriff « Vermehrungsgut » sind alle generativen Pflanzenteile zu verstehen, die zur Vermehrung der Kulturpflanze eingesetzt werden können.

Dazu zählen Samenkörner (Saatgut im engeren Sinne), Wurzeln, Früchte, Knollen, Rhizome, Sengelteile, Zweige (Stecklinge) und andere Pflanzenteile. Es zählen aber auch angekeimte Pflanzen und Jungpflanzen dazu, die nach der Ankeimung oder dem Auflaufen weiterverpflanzt werden sollen. Solche Jungpflanzen lassen sich durch eine vollständige oder partielle Tauchbehandlung vor dem Weiterverpflanzen gezielt schützen.

Als besonders geeigente Gegenmittel haben sich diejenigen Phenyl-oxo-essigsäuren und deren Ester entsprechend der Formel I erwiesen

a) worin $R_1$ Wasserstoff,
$R_2$ Wasserstoff oder einen unsubstituierten $C_1$-$C_{18}$ Alkyl-, $C_3$-$C_{18}$ Alkenyl-, $C_3$-$C_6$ Alkinyl- oder $C_3$-$C_8$ Cycloalkylrest bedeuten und
$X_1$ und $X_2$ die gegebene Bedeutung haben ;

b) worin $R_1$ Wasserstoff,
$R_2$ einen $C_1$-$C_6$ Alkyl-, $C_3$-$C_6$ Alkenyl- oder $C_3$-$C_6$ Cycloalkylrest bedeuten, welcher durch einen Rest $[C_2$-$C_3$ Alkylen $O]_nR'$, worin n 1 oder 2 und R' Wasserstoff oder $C_1$-$C_6$ Alkyl bedeuten, oder einen Rest $C_1$-$C_6$ Alkylthio, $C_1$-$C_6$ Hydroxyalkylthio, $C_1$-$C_6$ Alkoxycarbonyl, $C_1$-$C_6$ Alkylthiocarbonyl, $C_1$-$C_6$ Alkylcarbonyl, Amino, $C_1$-$C_6$ Alkylamino, Di-$C_1$-$C_6$-alkylamino, $C_3$-$C_{18}$ Alkenylcarbonyloxy, Carbamoyl, $C_1$-$C_4$ Alkylcarbamoyl, Di-$C_1$-$C_4$-alkylcarbamoyl oder Phenyl substituiert ist, wobei der Phenylrest seinerseits durch Halogen, Cyan, $C_1$-$C_6$ Alkyl, $C_1$-$C_6$ Haloalkyl, $C_1$-$C_6$ Alkoxy, $C_1$-$C_6$ Alkylthio, $C_1$-$C_6$ Alkylcarbonyl oder Nitro substituiert sein kann, und $X_1$ und $X_2$ die gegebene Bedeutung haben ;

c) worin $R_1$ Wasserstoff und
$R_2$ einen Phenyl-$C_3$-$C_6$-alkinylrest, der im Phenylring unsubstituiert oder durch Halogen, Cyan, $C_1$-$C_6$ Alkyl, $C_1$-$C_6$ Haloalkyl, $C_1$-$C_6$ Alkoxy, $C_1$-$C_6$ Alkylthio, $C_1$-$C_6$ Alkylcarbonyl oder Nitro substituiert ist, und $X_1$ und $X_2$ die gegebene Bedeutung haben.

Darunter fallen besonders folgende Einzelverbindungen auf :

4-Chlorphenylamino-oxo-essigsäure
4-Chlorphenylamino-oxo-essigsäure-methylester
4-Chlorphenyl-methylamino-oxo-essigsäure-methylester
4-Chlorphenylamino-oxo-essigsäure-äthylester
4-Chlorphenylamino-oxo-essigsäure-isopropylester
4-Chlorphenylamino-oxo-essigsäure-benzylester
4-Chlorphenylamino-oxo-essigsäure-phenyläthylester
4-Chlorphenylamino-oxo-essigsäure-cyclohexylester
4-Fluorphenylamino-oxo-essigsäure
4-Fluorphenylamino-oxo-essigsäure-methylester
4-Fluorphenylamino-oxo-essigsäure-äthylester
4-Fluorphenylamino-oxo-essigsäure-cyclohexylester
3-Fluorphenylamino-oxo-essigsäure
3-Fluorphenylamino-oxo-essigsäure-methylester
3-Fluorphenylamino-oxo-essigsäure-äthylester
3-Chlorphenylamino-oxo-essigsäure
3-Chlorphenylamino-oxo-essigsäure-phenyläthylester
3-Bromphenylamino-oxo-essigsäure-äthylester
4-Bromphenylamino-oxo-essigsäure-äthylester
3-Jodphenylamino-oxo-essigsäure-äthylester
4-Jodphenylamino-oxo-essigsäure-methylester
4-Jodphenylamino-oxo-essigsäure-äthylester
3-Chlor-4-fluorphenylamino-oxo-essigsäure-äthylester
3,4-Dichlorphenylamino-oxo-essigsäure-äthylester
3,4-Dibromphenylamino-oxo-essigsäure
3,4-Dibromphenylamino-oxo-essigsäure-äthylester
3,4-Dibromphenylamino-oxo-essigsäure-methylester.

Die Phenylamino-oxo-essigsäuren und ihre Ester werden in an sich bekannter Weise hergestellt, z. B. durch Umsetzen von einem Anilin der Formel III

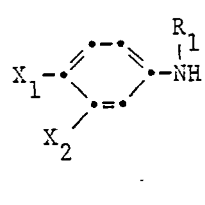

(III)

worin $R_1$, $X_1$ und $X_2$ die oben gegebene Bedeutung haben, mit Oxalsäure oder einem Oxalsäuremonoester der Formel IV

$$HOCOCOOR_2 \qquad (IV)$$

in einem inerten organischen Lösungsmittel in Gegenwart eines basischen Kondensationsmittels.

Solche Umsetzungen sind beschrieben, seihe z. B. Farmaco ed. Sci. *22* (1967), p. 717 die FR Patentschrift 1 517 896 oder die DT-OS 2 819 878.

Man kann das Anilin der Formel III ebenfalls mit einem Oxalsäurediester der Formel

$$R_2'OCOCOOR_2' \qquad (IVa)$$

worin $R_2'$ die für $R_2$ gegebene Bedeutung hat mit Ausnahme von Wasserstoff oder mit dem Halogenid eines Oxalsäuremonoesters der Formel IVb umsetzen

$$HalCOCOOR' \qquad (IVb)$$

worin Hal ein Halogenatom, vorzugsweise Chlor oder Brom bedeutet und R′ die oben gegebene Bedeutung hat.

Die Reaktion kann durch blosses Erhitzen der Reaktionspartner erfolgen, wird aber vorzugsweise in Gegenwart eines inerten organischen Lösungsmittels vorgenommen. Solche Lösungsmittel sind beispielsweise Toluol, Xylol, Benzol, Chloroform, Methylenchlorid.

Als basische Kondensationsmittel werden Amine wie Diäthyl- oder Triäthylamin, Pyridin, Cholin aber auch inorganische Basen z. B. Na-Carbonat, Na-Bicarbonat verwendet.

Ein weiterer Weg zur Herstellung der Phenylamino-oxo-essigsäuren und deren Ester der Formel I besteht darin, dass man ein Anilin der Formel II mit einem Oxalsäuredihalogenid der Formel IVc

$$Hal—CO—CO—Hal \qquad (IVc)$$

worin Hal ein Halogenatom, vorzugsweise Chlor oder Brom bedeutet, umgesetzt werden und das entstandene Phenylamino-oxo-essigsäurehalid der Formel V

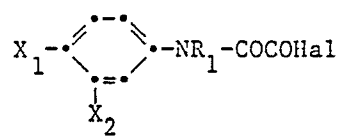

(V)

worin $R_1$, $X_1$ und $X_2$ die gegebene Bedeutung haben, weiter mit Wasser oder einem Alkohol der Formel VI VI

$$HOR_2 \qquad (VI),$$

worin $R_2$ die oben gegebene Bedeutung hat, umsetzt.

Auch diese Reaktion wird in einem inerten organischen Lösungsmittel durchgeführt, und in Gegenwart eines basischen Kondensationsmittels.

Ein Endprodukt, in dem $R_1$ und/oder $R_2$ Wasserstoff bedeutet, kann in an sich bekannter Weise in ein anderes umgewandelt werden, in dem $R_1$ und/oder $R_2$ eine von Wasserstoff verschiedene Bedeutung hat, wenn man eine Verbindung der Formel I

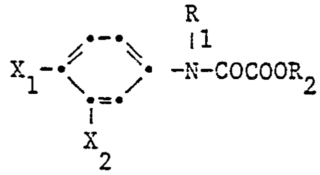

(I)

worin mindestens eine der Substituenten $R_1$ und $R_2$ Wasserstoff bedeutet, während der andere sowie $X_1$ und $X_2$ die angegebenen Bedeutungen haben, mit einer Verbindung der Formeln VII und/oder VIII umsetzt,

$$ZR'_1 \quad (VII) \qquad Z—R'_2 \quad (VIII)$$

worin $R'_1$ und $R'_2$ die für $R_1$ und $R_2$ oben gegebene Bedeutung haben mit Ausnahme von Wasserstoff und Z einen reaktionsfähigen organischen oder anorganischen Säurerest darstellt.

Solche Säurereste sind beispielsweise Chlorwasserstoff, Bromwasserstoff, Jodwasserstoff, Methylschwefel-, Toluolschwefel-, Methylsulfon- und Toluolsulfonsäurereste.

Ein Phenylamino-oxo-essigsäureester der Formel I kann gemäss der französischen Patentschrift No. 1 517 869 in Gegenwart eines vom Ester verschiedenen Alkanols und einer Base in einem anderen Ester umgewandelt werden.

Auch diese Umsetzungen werden in inerten organischen Lösungsmitteln, bei Normaldruck and Temperaturen welche zwischen 0 °C und der Siedetemperatur des Reaktionsgemisches liegen, durchgeführt. Wenn nötig kann eine organische oder anorganische Base als säurebindendes Mittel oder Kondensationsmittel zugesetzt werden.

Viele der Phenylamin-oxo-essigsäuren und -Ester der Formel I sind bekannt, beispielsweise aus der Französichen Patentschrift 1 517 896, der deutschen Offenlegungsschrift 2 819 878 der Farmaco ed Sci. *22* (1967), Seite 717 ff, andere sind neue Verbindungen.

Neu sind auch diejenigen Verbindungen der Formel I in denen $R_1$ Wasserstoff, einer der Reste $X_1$ und $X_2$ Halogenmethoxy bedeutet, während der andere und $R_2$ die gegebene Bedeutung haben.

Die Verbindungen der Formel I können für sich allein oder zusammen mit den zu antagonisierenden Wirkstoffen verwendet werden.

Dabei werden Verbindungen der Formel I in unveränderter Form oder vorzugsweise zusammen mit den in der Formulierungstechnik üblichen Hilfsmitteln eingesetzt und werden daher z. B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungen in z. B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen, d. h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z. B. durch inniges Vermischen und/oder Vermahlen der Wirkstoffe mit Streckmitteln, wie z. B. mit Lösungsmitteln, festen Trägerstoffen, und gegebenenfalls oberflächenaktiven Verbindungen (Tensiden).

Als Lösungsmittel können in Frage kommen : Aromatische Kohlenwasserstoffe, bevorzugt die Fraktionen $C_8$ bis $C_{12}$, wie z. B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder-äthyläther, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl ; oder Wasser.

Als feste Trägerstoffe, z. B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eingenschaften können auch hochdisperse Kieselsäure oder hochdisperse saugfähige Polymerisate zugesetzt werden. Als gekörnte, adsorptive Granulatträger kommen poröse Typen, wie z. B. Bimsstein, Ziegelbruch, Sepiolit oder Bentonit, als nicht sorptive Trägermaterialien z. B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen eigenen sich die Alkali-, Erdalkali- oder gegebenenfalls substituierte Ammoniumsalze von höheren Fettsäuren ($C_{10}$-$C_{22}$), wie z. B. die Na- oder K-Salze der Oel- oder Stearinsäure, oder von natürlichen Fettsäuregemischen, die z. B. aus Kokosnuss- oder Talgöl gewonnen werden können. Ferner sind auch die Fettsäure-methyl-taurinsalze zu erwähnen.

Häufiger werden jedoch sog. synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali oder gegebenenfalls substituierte Ammoniumsalze vor und weisen einen Alkylrest mit 8 bis 22 C-Atomen auf, wobei Alkyl auch den Alkylteil von Acylresten einschliesst, z. B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxyd-Addukten. Die sulfonierten Benzimidazolderivate enthalten vorzugsweise 2 Sulfonsäuregruppen und einen Fettsäurerest mit 8-22 C-Atomen. Alkylarylsulfonate sind z. B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate, wie z. B. Salze des Phosphorsäureesters eines p-Nonylphenol-(4-14)-Aethylenoxid-Adduktes in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglykoläther, Polypropylen-Polyäthylenoxyaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitantrioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z. B. das Stearyltrimethylammoniumchlorid oder das Benzyldi(2-chloräthyl) äthylammoniumbromid.

Die in der Formulierungstechnik gebräuchlichen Tenside sind u. a. in folgenden Publikationen beschreiben :

« Mc Cutcheon's Detergents and Emulsifiers Annual » MC Publishing Corp., Ringwood, New Jersey, 1979. Sisely and Wood, « Encyclopedia of Surface Active Agents », Chemical Publishing Co., Inc., New York, 1964.

Die pestiziden Zubereitungen enthalten in der Regel 0,1 bis 99 %, insbesondere 0,1 bis 95 %, Wirkstoff der Formel I, 1 bis 99 % eines festen oder flüssigen Zusatzstoffes und 0 bis 25 %, insbesondere 0,1 bis 25 %, eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Das nachfolgende Beispiel erläutert die Herstellung der Verbindung der Formel I. Anschliessend folgt eine Tabelle mit in analoger Weise zu diesen Beispielen hergestellten Verbindungen. Die Temperaturen sind in Celsiusgraden angegeben, Prozente und Angaben von « Teilen » beziehen sich auf das Gewicht.

## Beispiel 1

Herstellung von 4-Chlorphenylamino-oxo-essigsäure-methylester

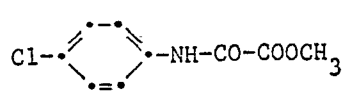

Zu einer Lösung von 6,4 g 4-Chloranilin und 7,9 g Pyridin in 150 ml trockenem Methylenchlorid tropft man unter Rühren während 10 Minuten bei 0-5 °C 6,7 g Oxalsäuremonomethylesterchlorid zu. Nach beendeter Zugabe wird die Suspension während 30 Minuten bei Raumtemperatur ausgerührt, dann mit 100 ml Methylenchlorid verdünnt, zweimal mit 3n-Salzsäure und einmal mit gesättigter Na-Bicarbonat-Lösung gewaschen, getrocknet und eingedampft. Das zurückbleibende Oel kristallisiert beim Anrühren. Man erhält so 10,4 g kristalline Titelverbindung vom Schmelzpunkt 162-164 °C.

(Siehe Tabellen Seite 9 ff.)

Fortsetzung

In analoger Weise zu diesem Beispiel werden folgende Verbindungen hergestellt :

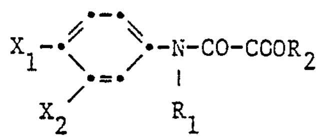

| No. | $X_1$, $X_2$ | $R_1$ | $R_2$ | |
|---|---|---|---|---|
| 1 | Cl(4) | H | $CH_3$ | Beispiel 1 Smp. 162-164° |
| 2 | Cl(4) | $CH_3$ | $CH_3$ | $n_D^{20}$ 1.5391 |
| 3 | Cl(4) | H | $C_4H_9n$ | Smp. 144-146° |
| 4 | Cl(4) | H | $C_6H_{13}n$ | Smp. 121° |
| 5 | Cl(4) | H | $C_8H_7n$ | Smp. 106-109° |
| 6 | Cl(4) | H | $C_{16}H_{33}n$ | Smp. 107-109° |
| 7 | Cl(4) | H | $CH_2-CH=CH_2$ | Smp. 114-115° |
| 8 | Br(4) | $CH_3$ | $CH_2-CH=CH_2$ | |
| 9 | Cl(4) | $CH_3$ | $CH_2-CH=CH_2$ | Oel |
| 10 | $OCF_3$ (4) | H | $CH_3$ | |
| 11 | Cl(4) | $CH_3$ | $CH\ C\equiv CH$ | Smp.68-69,5° |
| 12 | Cl(4) | H | $nC_8H_{16}-CH=CHC_8H_{17}$ | Wachs |
| 13 | Cl(4) | H | $iC_3H_7$ | |
| 14 | Cl(4) | H | $CH_2OH$ | |
| 15 | Cl(4) | H | $C_2H_4OH$ | |
| 16 | Cl(4) | H | $C_2H_4OCH_3$ | |
| 17 | Cl(4) | H | $C_2H_4OCH_3$ | |
| 18 | Cl(4) | H | $C_2H_4OC_2H_4OH$ | |
| 19 | Cl(4) | H | $C_2H_4(OC_2H_4)_2OH$ | Smp. 71-72° |
| 20 | Cl(4) | H | $C_2H_4(OC_2H_4)_3OH$ | |
| 21 | Cl(4) | H | $C_2H_4(OC_2H_4)_2OCH_3$ | |
| 22 | Cl(4) | H | $C_2H_4(OC_2H_4)_3OCH_3$ | |
| 23 | Cl(4) | H | $C_2H_4SCH_3$ | |
| 24 | Cl(4) | H | $C_2H_4NH_2$ | |

Fortsetzung

| No. | $X_1$, $X_2$ | $R_1$ | $R_2$ | |
|---|---|---|---|---|
| 25 | Cl(4) | $CH_3$ | $C_2H_4N(CH_3)_2$ | |
| 26 | Cl(4) | H | $CH_2COOC_2H_5$ | Smp. 116-118° |
| 27 | Cl(4) | H | $CH(CH_3)COOCH_3$ | Smp. 108-110° |
| 28 | Cl(4) | H | $CH_2COCH_3$ | |
| 29 | Cl(4) | H | $CH_2COC_6H_5$ | |
| 30 | Cl(4) | H | $CH_2COC_6H_4Cl(4)$ | |
| 31 | Cl(4) | H | $CH_2COC_6H_4Cl(3)$ | |
| 32 | Cl(4) | H | $CH_2COC_6H_4CH_3(3)$ | |
| 33 | Cl(4) | H | $CH_2COC_6H_4OCH_3(4)$ | |
| 35 | Cl(4) | $CH_3$ | $C_2H_4Cl$ | |
| 36 | Cl(4) | $CH_3$ | $C_2H_4Cl$ | |
| 37 | Cl(4) | H | $CH{=}CHC_6H_5$ | |
| 38 | Cl(4) | H | $C_2H_4C_6H_5$ | |
| 39 | Cl(4) | H | $CH_2C{\equiv}CC_6H_5$ | |
| 40 | Cl(4) | H | $C_2H_4OCH_2CH{=}CH_2$ | |
| 41 | Cl(4) | H | $CH_2C_6H_5$ | Smp. 125° |
| 42 | Cl(4) | $CH_3$ | $CH_2C_6H_4Cl$ | |
| 43 | Cl(4) | $C_2H_5$ | $CH_2C_2H_5$ | |
| 44 | Cl(4) | H | $C_2H_4C_6H_4$ | Smp. 162° |
| 45 | Cl(4) | H | $CH_2C_6H_3Cl_2(3,4)$ | |
| 46 | Cl(4) | $CH_3$ | $CH_2OCOC_{15}H_{31}$ | |
| 47 | Cl(4) | H | $CH_2OCOC_{18}H_{37}$ | |
| 48 | Cl(4) | H | $CH_2OCOC_{17}H_{35}$ | |
| 49 | Cl(4) | $CH_3$ | $CH_2$ Cyclopropyl | |
| 50 | Cl(4) | $CH_3$ | $CH_2$ Cyclohexyl | |
| 51 | Cl(4) | H | Cyclohexyl | Smp. 155-158° |
| 52 | Cl(4) | H | $C_2H_4CON(CH_3)_2$ | |
| 53 | Cl(4) | $C_2H_5$ | $CH_2CONH_2$ | |
| 54 | F(4) | H | $CH_3$ | Smp. 150-153° |
| 55 | F(4) | H | $C_2H_5$ | Smp. 118-119° |
| 56 | F(4) | $CH_3$ | $CH_3$ | |

Fortsetzung

| No. | $X_1$, $X_2$ | $R_1$ | $R_2$ |
|---|---|---|---|
| 57 | F(4) | H | $nC_8H_{17}$ |
| 58 | F(4) | H | $nC_{12}H_{25}$ |
| 59 | F(4) | H | $nC_{18}H_{37}$ |
| 60 | F(4) | $CH_3$ | $CH_2-CH=CH_2$ |
| 61 | F(4) | $CH_3$ | $CH_2-C(CH_3)=CH_2$ |
| 62 | F(4) | $CH_3$ | $CH_2-C\equiv CH$ |
| 63 | F(4) | H | $C_8H_{16}nCH=CHC_8H_{17}n$ |
| 64 | F(4) | H | $CH_2OH$ |
| 65 | F(4) | $CH_3$ | $CH_2OH$ |
| 66 | F(4) | $CH_3$ | $C_2H_4OH$ |
| 67 | F(4) | $CH_3$ | $C_2H_4OCH_3$ |
| 68 | F(4) | H | $C_2H_4OC_2H_5$ |
| 69 | F(4) | H | $C_2H_4(OC_2H_4)_2OH$ |
| 70 | F(4) | H | $C_2H_4(OC_2H_4)_3OH$ |
| 71 | F(4) | H | $C_2H_4(OC_2H_4)_2OCH_3$ |
| 72 | F(4) | H | $C_2H_4SCH_3$ |
| 73 | F(4) | H | $C_2H_4NH_2$ |
| 73 | F(4) | $CH_3$ | $C_2H_4N(CH_3)_2$ |
| 74 | F(4) | $CH_3$ | $CH_2COOCH_3$ |
| 75 | F(4) | H | $CH(CH_3)COOCH_3$ |
| 76 | F(4) | $CH_3$ | $CH_2COCH_3$ |
| 77 | F(4) | H | $CH_2COC_6H_5$ |
| 78 | F(4) | H | $CH_2COC_6H_4Cl(4)$ |
| 79 | F(4) | H | $CH_2COC_6H_4Cl(3)$ |
| 80 | F(4) | H | $CH_2COC_6H_3Cl_2(3,4)$ |
| 81 | F(4) | $CH_3$ | $CH_2COC_6H_4CH_3(3)$ |
| 82 | F(4) | H | $CH_2COC_6H_4OCH_3(4)$ |
| 83 | F(4) | $C_2H_5$ | $C_2H_4Cl$ |
| 84 | F(4) | H | $CH=CHC_6H_5$ |

Fortsetzung

| No. | $X_1$, $X_2$ | $R_1$ | $R_2$ | |
|---|---|---|---|---|
| 85 | F(4) | H | $C_2H_4C_6H_5$ | |
| 86 | F(4) | H | $CH_2C{\equiv}CC_6H_5$ | |
| 87 | F(4) | $CH_3$ | $CH_2C_6H_5$ | |
| 88 | F(4) | H | $CH_2C_6H_4CH_3(4)$ | |
| 89 | F(4) | H | $CH_2C_6H_4Cl(4)$ | |
| 90 | F(4) | H | $CH_2C_6H_4F(4)$ | |
| 91 | F(4) | H | $CH_2C_6H_3Cl_2(3,4)$ | |
| 92 | F(4) | H | $CH_2OCOC_{15}H_{31}$ | |
| 93 | F(4) | H | $CH_2OCOC_{18}H_{37}$ | |
| 94 | F(4) | H | $CH_2OCOC_{17}H_{35}$ | |
| 95 | F(4) | $CH_3$ | $CH_2$-Cyclopropyl | |
| 96 | F(4) | H | Cyclohexyl | Smp. 117° |
| 97 | F(4) | H | $C_2H_4CON(CH_3)_2$ | |
| 98 | F(4) | $CH_3$ | $CH_2CONH_2$ | |
| 99 | Cl(3)F(4) | H | $C_2H_5$ | Smp. 130-131° |
| 100 | Cl(3)F(4) | $CH_3$ | $CH_3$ | |
| 101 | Cl(3)F(4) | H | $nC_4H_9$ | |
| 102 | Cl(3)F(4) | H | $nC_8H_{17}$ | |
| 103 | Cl(3)F(4) | H | $nC_{12}H_{25}$ | |
| 104 | Cl(3)F(4) | H | $nC_{18}H_{37}$ | |
| 105 | Cl(3)F(4) | $CH_3$ | $CH_2CH{=}CH_2$ | |
| 106 | Cl(3)F(4) | H | $CH_2C(CH_3){=}CH_2$ | |
| 107 | Cl(3)F(4) | H | $CH_2C{\equiv}CH$ | |
| 108 | Cl(3)F(4) | H | $nC_8H_{16}CH{=}CHC_8H_{17}n$ | |
| 109 | Cl(3)F(4) | $CH_3$ | $CH_2OH$ | |
| 110 | Cl(3)F(4) | $C_2H_5$ | $C_2H_4OH$ | |
| 111 | Cl(3)F(4) | H | $C_2H_4OCH_3$ | |
| 112 | Cl(3)F(4) | $CH_3$ | $C_2H_4OC_2H_5$ | |
| 113 | Cl(3)F(4) | H | $C_2H_4(OC_2H_4)_2OH$ | |
| 114 | Cl(3)F(4) | H | $C_2H_4(OC_2H_4)_3OH$ | |

Fortsetzung

| No. | $X_1$, $X_2$ | $R_1$ | $R_2$ | |
|---|---|---|---|---|
| 115 | Cl(3)F(4) | H | $C_2H_4(OC_2H_4)_2OCH_3$ | |
| 116 | Cl(3)F(4) | $CH_3$ | $C_2H_4SCH_3$ | |
| 117 | Cl(3)F(4) | H | $C_2H_4NH_2$ | |
| 118 | Cl(3)F(4) | $CH_3$ | $C_2H_4N(CH_3)_2$ | |
| 119 | Cl(3)F(4) | H | $CH_2COOCH_3$ | |
| 120 | Cl(3)F(4) | H | $CH_2COCH_3$ | |
| 121 | Cl(3)F(4) | H | $CH_2COC_6H_5$ | |
| 122 | Cl(3)F(4) | H | $CH_2COC_6H_4Cl(4)$ | |
| 123 | Cl(3)F(4) | H | $CH_2COC_6H_4Cl(3)$ | |
| 124 | Cl(3)F(4) | H | $CH_2COC_6H_3Cl_2(3,4)$ | |
| 125 | Cl(3)F(4) | $CH_3$ | $CH_2COC_6H_4CH_3(3)$ | |
| 126 | Cl(3)F(4) | $CH_3$ | $CH_2COC_6H_4OCH_3(4)$ | |
| 127 | Cl(3)F(4) | $CH_3$ | $C_2H_4Cl$ | |
| 128 | Cl(3)F(4) | H | $CH=CHC_6H_5$ | |
| 129 | Cl(3)F(4) | H | $C_2H_4C_6H_5$ | |
| 130 | Cl(3)F(4) | H | $CH_2C \equiv CC_6H_5$ | |
| 131 | Cl(3)F(4) | $CH_3$ | $C_2H_4OCH_2CH=CH_2$ | |
| 132 | Cl(3)F(4) | $CH_3$ | $CH_2C_6H_5$ | |
| 133 | Cl(3)F(4) | $CH_3$ | $CH_2C_6H_4CH_3(4)$ | |
| 134 | Cl(3)F(4) | H | $CH_2C_6H_4Cl(4)$ | |
| 135 | Cl(3)F(4) | H | $CH_2C_6H_4Br(4)$ | |
| 136 | Cl(3)F(4) | H | $CH_2C_6H_3Cl_2(3,4)$ | |
| 137 | Cl(3)F(4) | H | $CH_2OCOC_{15}H_{31}$ | |
| 138 | Cl(3)F(4) | H | $CH_2OCOC_{18}H_{37}$ | |
| 139 | Cl(3)F(4) | H | $CH_2OCOC_{17}H_{35}$ | |
| 140 | Cl(3)F(4) | $CH_3$ | $CH_2$ Cyclopropyl | |
| 141 | Cl(3)Br(4) | H | $CH_3$ | Smp. 162-164° |
| 142 | Cl(3)Br(4) | H | $CH_2CH=CH_2$ | Smp. 148-151° |
| 143 | Cl(3)Br(4) | $CH_3$ | $CH_2C_6H_5$ | Smp. 122-125° |
| 144 | F(3) | H | H | Smp 186-190° |

Fortsetzung

| No. | $X_1$, $X_2$ | $R_1$ | $R_2$ | |
|---|---|---|---|---|
| 145 | F(3) | H | $C_2H_5$ | Smp. 80-88° |
| 146 | F(3) | H | $CH_3$ | Smp. 107-108° |
| 147 | F(4) | H | H | Smp. 144-145° dec. |
| 148 | Cl(3) | H | $C_2H_4C_6H_5$ | Smp. 95° |
| 149 | Cl(4) | H | H | Smp. 189-190 dec. |
| 150 | Br(3) | H | H | |
| 151 | Br(3) | $CH_3$ | $CH_3$ | |
| 152 | Br(4) | H | H | |
| 153 | Cl(3)F(4) | H | H | |
| 154 | Cl(3)F(4) | $CH_3$ | H | |
| 155 | F(3) | H | $nC_4H_9$ | |
| 156 | Br(3) | H | $C_2H_5$ | Smp. 126-132° |
| 157 | Br(4) | H | $C_2H_5$ | Smp. 157-158 |
| 158 | F(3)Cl(4) | H | $CH_3$ | |
| 159 | F(3)Cl(4) | H | $nC_6H_{13}$ | |
| 160 | $Cl_2$(3,4) | H | $C_2H_5$ | Smp. 176-178° |
| 161 | $Cl_2$(3,4) | $CH_3$ | $CH_3$ | Smp. 79-80° |
| 162 | $Cl_2$(3,4) | H | $CH_3$ | Smp. 163-165° |
| 163 | $Cl_2$(3,4) | $CH_3$ | $CH_2-C\equiv CH$ | |
| 164 | J(4) | H | H | |
| 165 | J(4) | H | $CH_3$ | Smp. 169-170° |
| 166 | J(4) | H | $C_2H_5$ | Smp. 146-147° |
| 167 | J(4) | H | $C_2H_5$ | Smp. 150-155° |
| 168 | $Br_2$(3,4) | H | H | |
| 169 | $Br_2$(3,4) | H | $CH_3$ | Smp. 161-162° |
| 170 | $Br_2$(3,4) | $CH_3$ | H | |
| 171 | $Br_2$(3,4) | H | $CH_2-CH=CH_2$ | Smp. 139-141° |
| 172 | Cl(3) | H | $CH_3$ | Smp. 115-117° |

Fortsetzung

| No. | $X_1$, $X_2$ | $R_1$ | $R_2$ | |
|---|---|---|---|---|
| 173 | Cl(3) | H | $C_2H_5$ | |
| 174 | Cl(3) | $CH_3$ | H | |
| 175 | Cl(3) | $C_2H_5$ | H | |
| 176 | J(3) | H | H | |
| 177 | J(4) | H | $CH_3$ | Smp. 169-170° |
| 178 | $OCHF_2$(3)Br(4) | H | $CH_3$ | Smp. 100-102° |
| 179 | $OCHF_2$(4) | H | $C_2H_5$ | Smp. 99-101° |
| 180 | $OCHF_2$(4) | H | $CH_3$ | Smp. 133-134° |

Beispiel 2

Die Wirkstoffe der Formel I vorliegender Erfindung können beispielsweise wie folgt formuliert werden :

Stäubemittel : Zur Herstellung eines a) 5 %igen und b) 2 %igen Stäubemittels werden die folgenden Stoffe verwendet :

a) 5 Teile 4-Chlorphenylamino-oxo-essigsäure-methylester oder einer Mischung davon mit einem Herbizid
95 Teile Talkum ;

b) 2 Teile des obigen Wirkstoffes oder einer Mischung
1 Teil hochdisperse Kieselsäure,
97 Teile Talkum ;

Die Wirkstoffe werden mit den Trägerstoffen vermischt und vermahlen und können in dieser Form zur Anwendung verstäubt werden.

Granulat : Zur Herstellung eines 5 %igen Granulates werden die folgenden Stoffe verwendet :

5 Teile 3-Chlor-phenylamino-oxo-essigsäure oder einer Mischung davon mit einem Herbizid
0,25 Teile epoxidiertes Pflanzenöl
0,25 Teile Cetylpolyglykoläther,
3,50 Teile Polyäthylenglykol,
91 Teile Koalin (Korngrösse 0,3-0,8 mm).

Die Aktivsubstanz oder die Mischung wird mit dem epoxidierten Pflanzenöl vermischt und mit 6 Teilen Aceton gelöst, hierauf wird Polyäthylenglykol und Cetylpolyglykoläther zugesetzt. Die so erhaltene Lösung wird auf Kaolin aufgesprüht, und anschliessend wird das Aceton im Vakuum verdampft. Ein derartiges Mikrogranulat lässt sich vorteilhaft in Saatfurchen einarbeiten.

Spritzpulver : Zur Herstellung eines a) 70 %igen b) 40 %igen c) und d) 25 %igen e) 10 %igen Spritzpulvers werden folgende Bestandteile verwendet :

a) 70 Teile 3,4-Dichlorphenylamino-oxo-essigsäure-methylester oder einer Mischung davon mit einem Herbizid
5 Teile Natriumdibutylnaphthylsulfonat,
3 Teile Naphthalinsulfonsäuren-Phenolsulfonsäuren-Formaldehyd-Kondensat 3 : 2 : 1,
10 Teile Kaolin,
12 Teile Champagne-Kreide ;

b) 40 Teile Wirkstoff oder Mischung
5 Teile Ligninsulfonsäure-Natriumsalz,
1 Teil Dibutylnaphthalinsulfonsäure-Natriumsalz,
54 Teile Kieselsäure ;

c) 25 Teile Wirkstoff oder Mischung
4,5 Teile Calcium-Ligninsulfonat,
1,9 Teile Champagne-Kreide/Hydroxyäthylcellulose-Gemisch (1 : 1),
1,5 Teile Natrium-dibutyl-naphthalinsulfonat,
15,5 Teile Kieselsäure,
19,5 Teile Champagne-Kreide,
28,1 Teil Kaolin ;

d) 25 Teile Wirkstoff oder Mischung
2,5 Teile Isooctylphenoxy-polyoxyäthylenäthanol,
1,7 Teile Champagne-Kreide/Hydroxyäthylcellulose-Gemisch (1 : 1) ;
8,3 Teile Natriumaluminiumsilikat,
16,5 Teile Kieselgur,
46 Teile Kaolin ;

e) 10 Teile Wirkstoff oder Mischung
3 Teile Gemisch der Natriumsalze von gesättigten Fettalkoholsulfaten,
5 Teile Naphthalinsulfonsäure/Formaldehyd-Kondensat,
82 Teile Kaolin.

Die Wirkstoffe werden in geeigneten Mischern mit den Zuschlagstoffen innig vermischt und auf entsprechenden Mühlen und Walzen vermahlen. Man erhält Spritzpulver von vorzüglicher Benetzbarkeit und Schwebefähigkeit, die sich mit Wasser Zu Suspensionen der gewünschten Konzentration verdünnen und insbesondere zur Blattapplikation (zwecks Wuchsverzögerung oder für Fungizideinsatz) verwenden lassen.

Emulgierbare Konzentrate : Zur Herstellung eines 25 %igen emulgierbaren Konzentrates werden folgende Stoffe verwendet :

25 Teile 3-Fluorphenylamino-oxo-essigsäure oder einer Mischung davon mit einem Herbizid
2,5 Teile epoxydiertes Pflanzenöl,
10 Teile eines Alkylarylsulfonat/Fettalkoholpolyglykoläther-Gemisches,
5 Teile Dimethylformamid,
57,5 Teile Xylol.

Paste : Zur Herstellung einer 45 %igen Paste werden folgende Stoffe verwendet :

a) 45 Teile 3-Chlorphenylamino-oxo-essigsäure oder einer Mischung davon mit einem Herbizid
5 Teile Natriumaluminiumsilikat,
14 Teile Cetylpolyäthylenglykoläther mit 8 Mol Aethylenoxid,
1 Teil Oleylpolyäthylenglykoläther mit 5 Mol Aethylenoxid,
2 Teile Spindelöl,
23 Teile Wasser
10 Teile Polyäthylenglykol.

b) 45 Teile des obigen Wirkstoffes oder einer Mischung
5 Teile Aethylenglykol,
3 Teile Octylphenoxypolyäthylenglycol mit 9-10 Mol Aethylenoxid pro Mol Octylphenol,
3 Teile von einem Gemisch aromatischer Sulfonsulfosäuren, kondensiert mit Formaldehyd als Ammoniumsalz,
1 Teil Siliconöl in Form einer 75 %igen Emulsion
0,1 Teil einer Mischung von 1-(3-Chlorallyl)-3,5,7-triazo-azonium-adamantan-chlorid mit Natriumcarbonat, Chloridwert mind. 11,5 %
0,2 Teile eines biopolymeren Verdickers mit max. 100 Keimen pro Gramm.
42,7 Teile Wasser.

Die Aktivsubstanz wird mit den Zuschlagstoffen in dazu geeigneten Geräten innig vermischt und vermahlen. Man erhält eine Paste, aus der sich durch Verdünnen mit Wasser Suspensionen jeder gewünschten Konzentration herstellen lassen.

## Beispiel 3

Die Fähigkeit der Verbindungen der Formel I, die phytotoxische Wirkung von starken Herbiziden auf Kulturpflanzen zu antagonisieren, wird durch die folgenden Versuche ermittelt :

Versuch an Weisen : Weizensamen werden in Plastiktöpfe, die 0,5 l Gartenerde enthalten, im Gewächshaus ausgesät. 12 Tage danach, wenn die Pflanzen das 2- bis 3-Blattstadium erreicht haben,

wird die als Gegenmittel zu prüfende Substanz zusammen mit einem Herbizid als Tankmischung appliziert. 20 Tage nach der Applikation wird dann die Wirkung beurteilt und in Prozent notiert. Als Referenzen dienen dabei die mit dem Herbizid allein behandelten Pflanzen (0 % Schutzwirkung) sowie vollständig unbehandelte Kontrolle (100 % Schutzwirkung). Die Ergebnisse sind in den folgenden Tabellen zusammengefasst.

Herbizid : α-[4-(3,5-Dichlorpyridyl-2-oxy)phenoxy]-propionsäure-2-propinylester

| Antidote | | Herbizid | relative Schutzwirkung |
|---|---|---|---|
| Verbindung No. | Aufwandmenge in kg/ha | Aufwandmenge in kg/ha | in % |
| 1 | 0,25 | 0,5 | 25 |
| 1 | 0,5 | 0,5 | 25 |
| 1 | 1,5 | 0,75 | 50 |
| 2 | 1,5 | 0,75 | 38 |
| 3 | 1,5 | 0,75 | 25 |
| 4 | 1,5 | 0,75 | 12,5 |
| 5 | 1,5 | 0,75 | 12,5 |
| 7 | 1,5 | 0,75 | 38 |
| 9 | 1,5 | 0,75 | 12,5 |
| 11 | 1,5 | 0,75 | 25 |
| 12 | 1,5 | 0,75 | 12,5 |
| 19 | 1,5 | 0,75 | 12,5 |
| 27 | 1,5 | 0,75 | 25 |
| 41 | 1,5 | 0,75 | 38 |
| 54 | 0,25 | 0,5 | 25 |
| 54 | 0,5 | 0,5 | 25 |
| 54 | 1,5 | 0,75 | 50 |
| 99 | 0,25 | 0,5 | 25 |
| 99 | 0,5 | 0,5 | 25 |
| 99 | 1,5 | 0,75 | 50 |
| 143 | 1,5 | 0,75 | 12,5 |
| 146 | 1,5 | 0,75 | 25 |
| 160 | 1,5 | 0,75 | 50 |
| 162 | 1,5 | 0,75 | 50 |
| 169 | 1,5 | 0,75 | 50 |
| 171 | 1,5 | 0,75 | 38 |
| 172 | 1,5 | 0,75 | 50 |
| 177 | 1,5 | 0,75 | 38 |

Herbizid : α-[4-(4-Trifluormethylpyridyl-2-oxy)phenoxy]-propionsäure-n-Butylester, «Fluazifop-butyl».

| Antidote | | Herbizid | relative Schutzwirkung |
|---|---|---|---|
| Verbindung No. | Aufwandmenge in kg/ha | Aufwandmenge in kg/ha | in % |
| 1 | 0,125 | 0,062 | 38 |

Herbizid : 1,2-Dimethyl-3,5-diphenyl-1H-pyrazolium-methylsulfat, «Difenzoquat»

| Antidote | | Herbizid | relative Schutzwirkung |
|---|---|---|---|
| Verbindung No. | Aufwandmenge in kg/ha | Aufwandmenge in kg/ha | in % |
| 1 | 0,5 | 1 | 38 |

Herbizid : 4-Chlorbut-2-inyl-3-chlorphenylcarbamat, «Barban»

| Antidote | | Herbizid | relative Schutzwirkung |
|---|---|---|---|
| Verbindung No. | Aufwandmenge in kg/ha | Aufwandmenge in kg/hs | in % |
| 1 | 4 | 4 | 63 |

Herbizid : 2-Chlor-4-äthylamino-6-t-butylamino-s-triazin «Therbutylazin»

| Antidote | | Herbizid | relative Schutzwirkung |
|---|---|---|---|
| Verbindung No. | Aufwandmenge in kg/ha | Aufwandmenge in kg/ha | in % |
| 1 | 0,5 | 0,5 | 38 |

Versuch an Gerste : Der obige Versuch wird genau gleich ausgeführt, nur dass anstelle von Weizen- Gerstensamen eingesetzt werden.

Herbizid : α-[4-(3,5-Dichlorpyridyl-2-oxy)phenoxy]-propionsäure-2-propinylester

| Antidote | | Herbizid | relative Schutzwirkung |
|---|---|---|---|
| Verbindung Nr. | Aufwandmenge in kg/hs | Aufwandmenge in kg/hs | in % |
| 1 | 0,5 | 0,25 | 38 |
| 19 | 0,5 | 1,5 | 50 |
| 169 | 1,5 | 1,5 | 12,5 |

Herbizid : α-[4-(3,5-Dichlorphenoxy)phenoxy]-propionsäure-methylester «Hoeton»

| Antidote Verbindung No. | Aufwandmenge in kg/hs | Herbizid Aufwandmenge in kg/ha | relative Schutzwirkung in % |
|---|---|---|---|
| 1 | 1 | 2 | 25 |
| 1 | 1 | 1 | 25 |

Herbizid : 1,2-Dimethyl-3,5-diphenyl-1H-pyrazolium-methylsulfat «Difenzoquat»

| Antidote Verbindung No. | Aufwandmenge in kg/hs | Herbizid Aufwandmenge in kg/ha | relative Schutzwirkung in % |
|---|---|---|---|
| 1 | 0,5 | 1 | 25 |

Herbizid : 2-Chlor-4-äthyl-6-t. butylamino-s-triazin «Terbutylazin»

| | | | |
|---|---|---|---|
| 1 | 0,5 | 0,5 | 25 |

Versuch an Mais : Der obige Versuch wird genau gleich ausgeführt, nur dass anstelle von Weizen- oder Gersten- Maissamen eingesetzt werden.

Herbizid : α-(2-Chlorcyclopropyl)-propionsäure-(3,5-dichlorcyanophenoxim)-ester

| Antidote Verbindung No. | Aufwandmenge in kg/ha | Herbizid Aufwandmenge in kg/ha | relative Schutzwirkung in % |
|---|---|---|---|
| 1 | 1 | 1 | 25 |

Versuch mit Weizen und Gerste : Weizen- und Gerstensamen werden im Gewächshaus in Containern von 27 × 17 cm und 22 cm Höhe gesät. Die Anzucht erfolgt unter optimalen Wuchsbedingungen, regelmässigem Bewässern, relativer Luftfeuchtigkeit von ca. 50 % Temperatur bei 20 °C Tagestemperatur, 12° Nachttemperatur. Nach 12 Tagen, wenn die Pflanzen aufgelaufen sind und das 2-3 Blatt-Stadium erreicht haben, wird das Gegenmittel oder Antidote zusammen mit dem Herbizid in verschiedenen Konzentrationen als Tankmischung appliziert. 24 Tage nach der Applikation wird dann die Wirkung beurteilt und in Prozent notiert. Als Referenzen dienen dabei die mit dem Herbizid allein behandelten Pflanzen (0 % Schutzwirkung) sowie die vollständig unbehandelte Pflanze (100 % Schutzwirkung). Die Ergebnisse sind wie folgt :

Herbizid : α-[4-(3,5-Dichlorpyridyl-3-oxy)phenoxy]-propionsäure-2-propinyl-ester

| Antidote Verbindung Nr. | Aufwandmenge in kg/ha | Herbizid Aufwandmenge in kg/ha | relative Schutzwirkung in % Weizen | Gerste |
|---|---|---|---|---|
| 1 | 0,5 | 0,5 | 50 | 25 |
| 1 | 0,5 | 0,25 | 62,5 | 37,5 |
| 1 | 0,5 | 0,125 | 37,5 | 25 |
| 1 | 0,375 | 0,375 | 50 | 25 |
| 1 | 0,375 | 0,182 | 50 | 37,5 |
| 1 | 0,375 | 0,091 | 37,5 | 25 |

Versuch mit Hirse (Sorghum) :

Applikation von Antidote und Herbizid als Tankmischung im Vorauflauf.

Blumentöpfe (oberer Durchmesser 6 cm) werden mit sandiger Lehmerde gefüllt und Hirsesamen der Sorte « Funk G 522 » werden eingesät. Nach dem Bedecken des Samens wird die als Antidote zu prüfende Substanz zusammen mit dem Herbizid in verdünnter Lösung als Tankmischung auf die Bodenoberfläche versprüht. 14 Tage nach der Herbizidapplikation wird die Schutzwirkung des Antidots in Prozent bonitiert. Als Referenzen dienen dabei die mit Herbizid allein behandelten Pflanzen (keine Schutzwirkung) sowie die vollständig unbehandelte Kontrolle (100 % Wachstum). Das Ergebnis ist wie folgt :

Herbizid : 2-Chlor-6'-äthyl-N-(2"-methoxy-1"-methyläthyl)-acet-o-Toluidid « Metolachlor »

| Antidote | | Herbizid | relative Schutzwirkung |
|---|---|---|---|
| Verbindung No. | Aufwandmenge in kg/ha | Aufwandmenge in kg/ha | in % |
| 7 | 1,5 | 1,5 | 38 |
| 9 | 1,5 | 1,5 | 38 |
| 27 | 1,5 | 1,5 | 38 |
| 160 | 1,5 | 1,5 | 38 |

Versuch mit in Wasser gesätem Reis :

Applikation der Antidote während der Samenquellung des Reises.

Reissamen werden während 48 Stunden mit Lösungen der als Antidote zu prüfenden Substanz von 100 ppm getränkt. Anschliessend werden die Samen etwa 2 Stunden trocknen gelassen, bis sie nicht mehr kleben. Plastik Container (25 cm lang, 17 cm breit und 12 cm hoch) werden bis 2 cm unter den Rand mit sandigem Lehm gefüllt. Die vorgequollenen Samen werden auf der Bodenfläche des Containes gesät und nun ganz schwach gedeckt. Die Erde wird in einem feuchten (nichtsumpfigen) Zustand gehalten. Dann wird das Herbizid in verdünnter Lösung auf die Bodenoberfläche versprüht. Der Wasserstand wird entsprechend dem Wachstum sukzessive erhöht. 21 Tage danach wird die Schutzwirkung des Antidots in Prozent bonitiert. Als Referenzen dienen dabei die mit dem Herbizid allein behandelten Pflanzen (keine Schutzwirkung) sowie die vollständig unbehandelte Kontrolle (100 % Wachstum). Die Ergebnisse sind untenstehend zusammengefasst.

Herbizid : 2-Chlor-2',6'-diäthyl-N-(2"-propyloxyäthyl)-acetanilid « Pretilachlor »

| Antidote | | Herbizid | relative Schutzwirkung |
|---|---|---|---|
| Verbindung No. | Aufwandmenge in kg/ha | Aufwandmenge in kg/ha | in % |
| 3 | 100 | 0,25 | 25 |
| 178 | 100 | 0,25 | 50 |

Versuch mit trocken gesätem Reis :

Applikation der Antidote als Saatbeizung.

Reissamen werden mit der als Antidote zu prüfenden Substanz in einen Glasbehälter gemischt. Samen und Produkt werden durch Schütteln und Rotation gut zusammengemischt. Dann werden Container (47 cm lang, 29 cm breit und 24 cm hoch) mit sandiger Lehmerde gefüllt und die gebeizten Samen werden eingesät. Nach dem Bedecken des Samens wird das Herbizid in einer verdünnten Lösung auf die Bodenoberfläche versprüht. Etwa 20 Tage nach der Saat (3-Blattstadium der Reispflanzen) wird die Bodenoberfläche mit 4 cm Wasser-Höhe beschichtet. 30 Tage nach der Herbizidapplikation wird die Schutzwirkung des Antidots in Prozent bonitiert. Als Referenzen dienen dabei die mit Herbizid allein behandelten Pflanzen (keine Schutzwirkung) sowie die vollständig unbehandelte Kontrolle (100 % Wachstum). Die Ergebnisse sind wie folgt :

Herbizid : α-[4-(3,5-Dichlorpyridyl-2-oxy)phenoxy]-propionsäure-2-propinyl-ester

| Antidote | | Herbizid | relative Schutzwirkung |
|---|---|---|---|
| Verbindung No. | Aufwandmenge in kg/ha | Aufwandmenge in kg/ha | in % |
| 1 | 0,4 | 0,25 | 38 |

Versuch mit trocken gesätem Reis :

(20 Tage nach der Saat, wenn die Reispflanzen das 3-Blatt Stadium erreicht haben, wird der Boden überflutet). Applikation von Antidote und Herbizid als Tankmischung.

Reissamen der Sorte IR-36 werden in Container (47 cm lang, 29 cm breit und 24 cm hoch) eingesät, bedeckt und leicht festgedrückt. Dann wird die als Antidote zu prüfende Substanz zusammen mit dem Herbizid als Tankmischung versprüht. Etwa 20 Tage nach der Saat (3-Blattstadium der Reispflanzen) wird die Bodenoberfläche mit 4 cm Wasser Höhe beschichtet. 30 Tage nach dem Verpflanzen wird die Schutzwirkung des Antidots in Prozent bonitiert. Als Referenzen dienen dabei die mit Herbizid allein behandelten Pflanzen (keine Schutzwirkung) sowie die vollständig unbehandelte Kontrolle (100 % Schutzwirkung). Die Ergebnisse sind untenstehend festgehalten.

Herbizid : 2-Chlor-6'-äthyl-N-(2"-methyloxy-1"-methyläthyl)-acet-o-toluidid « Metolachlor »

| Antidote | | Herbizid | relative Schutzwirkung |
|---|---|---|---|
| Verbindung No. | Aufwandmenge in kg/ha | Aufwandmenge in kg/ha | in % |
| 178 | 1,5 | 0,25 | 25 |

Versuch mit « Trockenreis ».

Applikation der Antidote als Saatbeizung.

Reissamen der Sorte IR-36 werden mit der als Antidote zu prüfenden Substanz in einen Glasbehälter gemischt. Samen und Produkt werden durch Schütteln und Rotation gut zusammengemischt. Anschliessend werden Plastikcontainer (47 cm lang, 29 cm breit und 24 cm hoch) mit sandiger Lehmerde gefüllt und die gebeizten Samen werden eingesät. Nach dem Bedecken des Samens wird das Herbizid auf die Bodenoberfläche versprüht. 18 Tage nach der Saat wird die Schutzwirkung des Antidots in Prozent bonitiert. Als Referenzen dienen dabei die mit Herbizid allein behandelten Pflanzen (keine Schutzwirkung) sowie die vollständig unbehandelte Kontrolle (100 % Wachstum). Die Ergebnisse sind wie folgt :

Herbizid : α-[4-(3,5-Dichlorpyridin-2-yl) phenoxy]-propionsäure-2-propinyl-ester

| Antidote | | Herbizid | relative Schutzwirkung |
|---|---|---|---|
| Verbindung No. | Aufwandmenge in kg/ha | Aufwandmenge in kg/ha | in % |
| 1 | 0,6 | 0,25 | 50 |

## Patentansprüche

1. Selektives herbizides Mittel, dadurch gekennzeichnet, dass es neben dem Herbizid und inerten Zuschlagstoffen zur Erhöhung der Toleranz der Kulturpflanze eine Phenylamino-oxo-essigsäure oder einen Ester davon, entsprechend der Formel I enthält

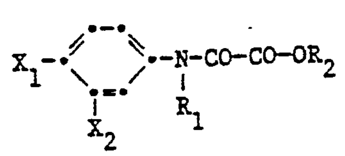

(I)

worin

$X_1$ und $X_2$ unabhängig voneinander je Halogen oder Halogenmethoxy oder eines davon auch Wasserstoff,

$R_1$ Wasserstoff oder $C_1$-$C_4$ Alkyl,

$R_2$ Wasserstoff, einen unsubstituierten $C_1$-$C_{18}$ Alkyl-, $C_3$-$C_{18}$ Alkenyl, $C_3$-$C_6$ Alkinyl- oder $C_3$-$C_8$ Cycloalkylrest ; einen $C_1$-$C_6$ Alkyl-, $C_3$-$C_6$ Alkenyl oder $C_3$-$C_8$ Cycloalkylrest, welcher durch einen Rest [$C_2$-$C_3$ Alkylen O]$_n$R', worin n 1 oder 2 und R' Wasserstoff oder $C_1$-$C_6$ Alkyl bedeuten, oder einen Rest $C_1$-$C_6$-Alkylthio, $C_1$-$C_6$ Hydroxyalkylthio, $C_1$-$C_6$ Alkoxycarbonyl, $C_1$-$C_6$ Alkylthiocarbonyl, $C_1$-$C_6$ Alkylcarbonyl, Amino, $C_1$-$C_6$-Alkylamino, Di-$C_1$-$C_6$-alkylamino, $C_3$-$C_{18}$ Alkenylcarbonyloxy, Carbamoyl, $C_1$-$C_4$ Alkylcarbamoyl, Di-$C_1$-$C_4$-alkylcarbamoyl oder Phenyl substituiert ist, wobei der Phenylrest seinerseits durch Halogen, Cyan, $C_1$-$C_4$ Alkyl, $C_1$-$C_6$ Haloalkyl, $C_1$-$C_6$ Alkoxy, $C_1$-$C_6$ Alkylthio, $C_1$-$C_6$ Alkylcarbonyl oder Nitro substituiert sein kann ; oder $R_2$ ist ein Phenyl-$C_3$-$C_6$-alkinylrest der im Phenylring wie oben substituiert sein kann.

2. Mittel gemäss Anspruch 1, welches neben der Phenylamino-oxo-essigsäure der Formel I oder eines Esters davon ein Herbizid entsprechend der Formel II enthält

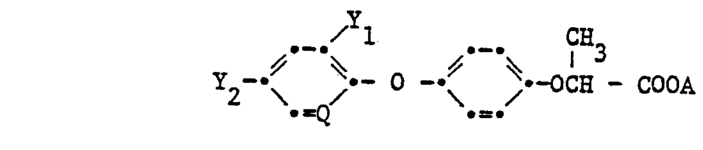

(II)

worin

$Y_1$ Wasserstoff oder Halogen,

$Y_2$ Wasserstoff, Halogen oder Trifluormethyl,

Q Stickstoff oder die Gruppe —CH =,

A $C_1$-$C_4$ Alkyl, $C_3$-$C_4$ Alkenyl, $C_3$-$C_4$ Alkinyl oder $C_2$-$C_8$ Alkoxyalkyl oder einen Iminorest

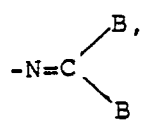

worin die B je $C_1$-$C_4$ Alkyl oder zusammen $C_4$-$C_5$ Alkylen bedeuten.

3. Mittel gemäss Anspruch 1, welches neben der Phenylamino-oxo-essigsäure der Formel I oder eines Esters, davon als Herbizid ein Chloracetanilid, ausgesucht aus 2-Chlor-2,6'-diäthyl-N-(2"-propyloxyäthyl-acetanilid, 2-Chlor-6'-äthyl-N-(2"-methoxy-1"-methyläthyl)-acet-o-toluidid, 2-Chlor-2',6'-diäthyl-N-(butoxymethyl)acetanilid, 2-Chlor-2'-6'-diäthyl-N-(methoxymethyl)acetanilid enthält.

4. Mittel gemäss Anspruch 1, welches neben der Phenylamino-oxo-essigsäure der Formel I oder eines Esters davon als Herbizid eine Triazinverbindung, ausgesucht aus 2,4-Bis(äthylamino)-6-methylthio-1,3,5-triazin, 2-(1',2'-Dimethylpropylamino-4-äthylamino-6-methyl-thio-1,3,5-triazin, 2-Tert.-Butylamino-4-äthylamino-6-methylthio-1,3,5-triazin-2-Chlor-4-tert.butylamino-6-äthylamino-1,2,5-triazin enthält.

5. Mittel gemäss Anspruch 1, welches neben der Phenylamino-oxo-essigsäure der Formel I oder eines Esters davon als Herbizid 1,2-Dimethyl-3,5-diphenyl-1H-pyrazolium-methylsulfat enthält.

6. Mittel gemäss Anspruch 5, welches neben der Phenylamino-oxo-essigsäure der Formel I als Herbizid α-(2-Chlorcyclopropyl)-propionsäure-(3,5-dichlorcyanophenoxim)-ester enthält.

7. Mittel gemäss Anspruch 1, dadurch gekennzeichnet, dass es neben dem Herbizid und inerten Zutaten als Gegenmittel eine Phenylamino-oxo-essigsäure oder einen Ester davon der Formel I enthält, worin

$R_1$ Wasserstoff,

$R_2$ Wasserstoff oder einen unsubstituierten $C_1$-$C_{18}$ Alkyl-, $C_3$-$C_{18}$ Alkenyl-, $C_3$-$C_6$ Alkinyl- oder $C_3$-$C_8$ Cycloalkylrest,

$X_1$ und $X_2$ unabhängig voneinander je Halogen oder Halogenmethoxy oder eines davon auch Wasserstoff bedeuten.

8. Mittel gemäss Anspruch 1, dadurch gekennzeichnet, dass es neben dem Herbizid und inerten Zutaten als Gegenmittel eine Phenylamino-oxo-essigsäure der Formel I oder einen Ester davon enthält, worin

$R_1$ Wasserstoff,

$R_2$ einen $C_1$-$C_6$ Alkyl-, $C_3$-$C_6$ Alkenyl- oder $C_3$-$C_8$ Cycloalkylrest, welcher durch einen Rest [$C_2$-$C_3$ Alkylen O]$_n$R', worin n 1 oder 2 und R' Wasserstoff oder $C_1$-$C_6$ Alkyl bedeuten, oder einen Rest $C_1$-$C_6$ Alkylthio, $C_1$-$C_6$ Hydroxyalkylthio, $C_1$-$C_6$ Alkoxycarbonyl, $C_1$-$C_6$ Alkylthiocarbonyl, $C_1$-$C_6$ Alkylcarbonyl, Amino, $C_1$-$C_6$ Alkylamino, Di-$C_1$-$C_6$-alkylamino, $C_3$-$C_{18}$ Alkenylcarbonyloxy, Carbamoyl, $C_1$-$C_4$ Alkylcarbamoyl, Di-$C_1$-$C_4$-alkylcarbamoyl oder Phenyl substituiert ist; wobei der Phenylrest seinerseits durch Halogen, Cyan, $C_1$-$C_6$ Alkyl, $C_1$-$C_6$ Haloalkyl, $C_1$-$C_6$ Alkoxy, $C_1$-$C_6$ Alkylthio, $C_1$-$C_6$ Alkylcarbonyl oder Nitro substituiert sein kann,

$X_1$ und $X_2$ unabhängig voneinander je Halogen oder Halogenmethoxy oder eines davon auch Wasserstoff bedeuten.

9. Mittel gemäss Anspruch 1, dadurch gekennzeichnet, dass es neben dem Herbizid und inerten Zutaten als Gegenmittel einen Phenylamino-oxo-essigsäureester der Formel I oder einen Ester davon enthält, worin

$R_1$ Wasserstoff,

$R_2$ einen Phenyl-$C_3$-$C_6$-alkinylrest, der unsubstituiert oder im Phenylring durch Halogen, Cyan, $C_1$-$C_6$ Alkyl, $C_1$-$C_6$ Haloalkyl, $C_1$-$C_6$ Alkoxy, $C_1$-$C_6$ Alkylthio, $C_1$-$C_6$ Alkoxycarbonyl, $C_1$-$C_6$ Alkylcarbonyl, Amino, $C_1$-$C_6$ Alkylamino, Carbamoyl, $C_1$-$C_4$ Alkylcarbamoyl, Di-$C_1$-$C_4$-alkylcarbamoyl substituiert ist,

$X_1$ und $X_2$ unabhängig voneinander je Halogen oder Halogenmethoxy oder eines davon auch Wasserstoff bedeuten.

10. Verfahren zum Schützen von Kulturpflanzen vor der phytotoxischen Wirkung von Herbiziden, dadurch gekennzeichnet, dass man die Kulturpflanzen vor oder nach deren Auflaufen mit einer wirksamen Menge eines Mittels gemäss Anspruch 1 behandelt.

11. Verfahren zum Schützen von Kulturpflanzen vor der phytotoxischen Wirkung von Herbiziden, dadurch gekennzeichnet, dass man deren Samen, Knollen oder Stecklinge mit einer wirksamen Menge eines Mittels gemäss Anspruch 1 behandelt.

12. Verfahren zum Schützen von Getreide-, Reis-, Mais- oder Hirsekulturen, dadurch gekennzeichnet, dass man die Kulturen oder deren Saatgut Folge gleichzeitig, oder in Kurzer mit einer wirksamen Menge α-4-(3,5-Dichlorpyridyl-2-oxy)-phenoxy]-propionsäure-2-propinylester als Herbizid und mit einer wirksamen Menge 3,4-Dibromphenylamino-oxo-essigsäure-methylester als Gegenmittel behandelt.

13. Verfahren zur selektiven Bekämpfung von Unkräutern in Kulturen von Nutzpflanzen, dadurch gekennzeichnet, dass man die Nutzpflanzenkulturen, deren Anbaufläche oder deren Saatgut gleichzeitig, oder in Kurzer Folge mit einer wirksamen Menge eines Herbizids und mit der eines Gegenmittels gemäss Anspruch 1 behandelt.

14. Verfahren gemäss Anspruch 13, dadurch gekennzeichnet, dass Getreide, Reis-, Mais- oder Hirsekulturen behandelt werden.

15. Verfahren gemäss Anspruch 13, dadurch gekennzeichnet, dass das Saatgut und Vermehrungsgut der Kulturpflanzen behandelt wird.

## Claims

1. A selective herbicidal composition for enhancing the tolerance of cultivated plants, which composition contains a phenylamino-oxo-acetic acid, or an ester thereof, of the formula I

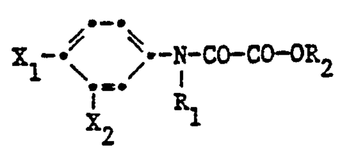

(I)

wherein

$X_1$ and $X_2$, each independently of the other, are halogen or halomethoxy, or one of $X_1$ and $X_2$ is also hydrogen,

$R_1$ is hydrogen or $C_1$-$C_4$ alkyl,

$R_2$ is hydrogen, unsubstituted $C_1$-$C_{18}$ alkyl, $C_3$-$C_{18}$ alkenyl, $C_3$-$C_6$ alkynyl or $C_3$-$C_8$ cycloalkyl, or $C_1$-$C_6$ alkyl, $C_3$-$C_6$ alkenyl or $C_3$-$C_6$ cycloalkyl radicals which are substituted by $[C_2$-$C_3$ alkylene-O$]_n$R', wherein n is 1 or 2 and R' is hydrogen or $C_1$-$C_6$ alkyl ; or by $C_1$-$C_6$-alkylthio, $C_1$-$C_6$ hydroxyalkylthio, $C_1$-$C_6$ alkoxycarbonyl, $C_1$-$C_6$ alkylthiocarbonyl, $C_1$-$C_6$ alkylcarbonyl, amino, $C_1$-$C_6$ alkylamino, $C_1$-$C_6$ dialkylamino, $C_1$-$C_{18}$ alkenylcarbonyloxy, carbamoyl, $C_1$-$C_4$ alkylcarbamoyl, $C_1$-$C_4$ dialkylcarbamoyl, or phenyl which is unsubstituted or substituted by halogen, cyano, $C_1$-$C_4$ alkyl, $C_1$-$C_6$-haloalkyl, $C_1$-$C_6$ alkoxy, $C_1$-$C_6$ alkylthio, $C_1$-$C_6$ alkylcarbonyl, or nitro ; or $R_2$ is $C_3$-$C_6$ phenylalkynyl which may be substituted in the phenyl ring as indicated above, together with the herbicide and inert carriers.

2. A composition according to claim 1, which contains a herbicide of the formula II

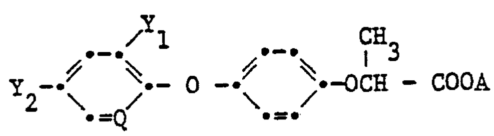

(II)

wherein

$Y_1$ is hydrogen or halogen,

$Y_2$ is hydrogen, halogen or trifluoromethyl,

Q is nitrogen or the —CH=group,

A is $C_1$-$C_4$ alkyl, $C_3$-$C_4$ alkenyl, $C_3$-$C_4$ alkynyl, $C_2$-$C_8$-alkoxyalkyl or an imino radical

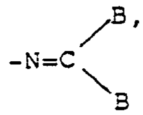

wherein each B independently of the other is $C_1$-$C_4$ alkyl or taken together they are $C_4$-$C_5$ alkylene, in addition to the phenylamino-oxo-acetic acid of formula I or an ester thereof.

3. A composition according to claim 1, which contains as herbicide a chloroacetanilide selected from the group consisting of 2-chloro-2,6'-diethyl-N-(2''-propoxyethyl)-acetanilide, 2-chloro-6'-ethyl-N-(2''-methoxy-1''-methylethyl)-acet-o-toluidide, 2-chloro-2',6'-diethyl-N-(butoxymethyl)-acetanilide, 2-chloro-2',6'-diethyl-N-(methoxymethyl) acetanilide, in addition to the phenylamino-oxo-acetic acid of formula I or an ester thereof.

4. A composition according to claim 1, which contains as herbicide a triazine compound selected from the group consisting of 2,4-bis(ethylamino)-6-methylthio-1,3,5-triazine, 2-(1',2'-dimethylpropylamino-4-ethylamino-6-methylthio-1,3,5-triazine, 2-tert-butylamino-4-ethylamino-4-ethylamino-6-methylthio-1,3,5-triazine, 2-chloro-4-tert-butylamino-6-ethylamino-1,2,5-triazine, in addition to the phenylamino-oxo-acetic acid of formula I or an ester thereof.

5. A composition according to claim 1, which contains 1,2-dimethyl-3,5-diphenyl-1H-pyrazolium methyl sulfate as herbicide, in addition to the phenylamino-oxo-acetic acid of formula I or an ester thereof.

6. A composition according to claim 5, which contains 3,5-dichlorophenoxime-α-(2-chlorocyclopropyl)propionate as herbicide, in addition to t hephenylamino-oxo-acetic acid of formula I or an ester thereof.

7. A composition according to claim 1, which contains as antidote a phenylamino-oxo-acetic acid, or an ester thereof, of formula I, wherein

$R_1$ is hydrogen,

$R_2$ is hydrogen or an unsubstituted $C_1$-$C_{18}$ alkyl, $C_3$-$C_{18}$ alkenyl, $C_3$-$C_6$ alkynyl or $C_3$-$C_8$ cycloalkyl radical, and

$X_1$ and $X_2$, each independently of the other are halogen or halomethoxy, or one of $X_1$ and $X_2$ is also hydrogen, together with the herbicide and inert carriers.

8. A composition according to claim 1, which contains as antidote a phenylamino-oxo-acetic acid or an ester thereof, of the formula I, wherein

$R_1$ is hydrogen,

$R_2$ is $C_1$-$C_6$ alkyl, $C_3$-$C_6$ alkenyl or $C_3$-$C_6$ cycloalkyl which are substituted by $[C_2$-$C_3$ alkylene-$O]_nR'$, wherein n is 1 or 2 and R' is hydrogen or $C_1$-$C_6$ alkyl ; or by $C_1$-$C_6$-alkylthio, $C_1$-$C_6$ hydroxyalkylthio, $C_1$-$C_6$ alkoxycarbonyl, $C_1$-$C_6$ alkylthiocarbonyl, $C_1$-$C_6$ alkylcarbonyl, amino, $C_1$-$C_6$ alkylamino, $C_1$-$C_6$ dialkylamino, a $C_3$-$C_{18}$ alkenylcarbonyl group, carbamoyl, $C_1$-$C_4$alkylcarbamoyl, $C_1$-$C_4$ dialkylcarbamoyl, or phenyl which may in turn be substituted by halogen, cyano, $C_1$-$C_6$ alkyl, $C_1$-$C_6$-haloalkyl, $C_1$-$C_6$ alkoxy, $C_1$-$C_6$ alkylthio, $C_1$-$C_6$ alkylcarbonyl, or nitro, and

$X_1$ and $X_2$, each independently of the other, are halogen or halomethoxy, or one of $X_1$ and $X_2$ is also hydrogen, together with the herbicide and inert carriers.

9. A composition according to claim 1, which contains as antidote a phenylamino-oxo-acetic acid, or an ester thereof, wherein

$R_1$ is hydrogen,

$R_2$ is a $C_3$-$C_6$ phenylalkynyl radical which is unsubstituted or substituted in the phenyl ring by halogen, cyano, $C_1$-$C_6$ alkyl, $C_1$-$C_6$ haloalkyl, $C_1$-$C_6$ alkoxy, $C_1$-$C_6$ alkylthio, $C_1$-$C_6$ alkoxycarbonyl, $C_1$-$C_6$ alkylcarbonyl, amino, $C_1$-$C_6$ alkylamino, carbamoyl, $C_1$-$C_4$ alkylcarbamoyl, or $C_1$-$C_4$ dialkylcarbamoyl, and

$X_1$ and $X_2$, each independently of the other, are halogen or halomethoxy, or one of $X_1$ and $X_2$ is also hydrogen, together with the herbicide and inert carriers.

10. A method of protecting cultivated plants from the phytotoxic action of herbicides, which comprises treating said plants pre- or postemergence with an effective amount of a composition according to claim 1.

11. A method of protecting cultivated plants from the phytotoxic action of herbicides, which comprises treating the seeds, tubers or seedlings thereof with an effective amount of a composition according to claim 1.

12. A method of protecting crops of cereals, rice, maize or sorghum, which comprises treating said crops or the seeds thereof, simultaneously or in rapid succession, with an effective amount of 2-propynyl-α-4-(3,5-dichloropyridyl-2-oxy)phenoxypropionate as herbicide and with an effective amount of methyl 3,4-dibromophenylamino-oxo-acetate as antidote.

13. A method of selectively controlling weeds in crops of useful plants, which comprises treating said plants, the locus thereof or the seeds thereof, simultaneously or in rapid succession, both with an effective amount of a herbicide and with an effective amount of an antidote according to claim 1.

14. A method according to claim 13, wherein the crops to be treated are crops of cereals, rice, maize or sorghum.

15. A method according to claim 13, which comprises treating seeds and propagation products of the cultivated plants.

## Revendications

1. Agent herbicide sélectif, caractérisé en ce qu'il contient, outre l'herbicide et des additifs inertes pour accroître la tolérance de la plante cultivée, un acide phénylamino-oxo-acétique ou un de ses esters, correspondant à la formule I

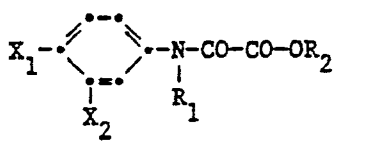

(I)

où

$X_1$ et $X_2$ représentent chacun indépendamment l'un de l'autre un halogène ou un halogèneméthoxy, ou encore l'un d'entre eux un hydrogène,

$R_1$ représente un hydrogène ou un alcoyle en $C_1$ à $C_4$ et

$R_2$ représente un hydrogène, un radical alcoyle en $C_1$ à $C_{18}$, alcényle en $C_3$ à $C_{18}$, alcynyle en $C_3$ à $C_6$ ou cycloalcoyle en $C_3$ à $C_8$ ; un radical alcoyle en $C_1$ à $C_6$, alcényle en $C_3$ à $C_6$ ou cycloalcoyle en $C_3$ à $C_8$, qui est substitué par un radical [alcoylène en $C_2$ à $C_3$-O]$_n$R', où n vaut 1 ou 2 et R' représente un hydrogène ou un alcoyle en $C_1$ à $C_6$, ou un radical alcoylthio en $C_1$ à $C_6$, hydroxyalcoylthio en $C_1$ à $C_4$, alcoxycarbonyle en $C_1$ à $C_6$, (alcoylthio) carbonyle en $C_1$ à $C_6$, alcoylcarbonyle en $C_1$ à $C_6$, amino, alcoylamino en $C_1$ à $C_6$, dialcoylamino en $C_1$ à $C_6$, alcénylcarbonyloxy en $C_1$ à $C_{18}$, carbamoyle, alcoylcarbamoyle en $C_1$ à $C_4$, di-alcoylcarbamoyle en $C_1$ à $C_4$ ou phényle, où le radical phényle de son côté peut être substitué par halogène, cyano, alcoyle en $C_1$ à $C_6$, haloalcoyle en $C_1$ à $C_6$, alcoxy en $C_1$ à $C_6$, alcoylthio en $C_1$ à $C_6$, alcoylcarbonyle en $C_1$ à $C_6$ ou nitro ; ou $R_2$ représente un radical phénylalcynyle en $C_3$ à $C_6$ qui peut être substitué dans le noyau phényle comme ci-dessus.

2. Agent selon la revendication 1, qui contient, outre l'acide phénylamino-oxo-acétique de formule I ou un de ses esters, un herbicide correspondant de formule II

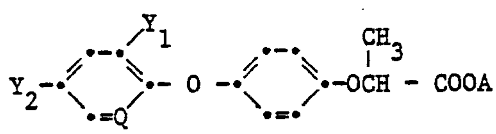

(II)

où

$Y_1$ représente un hydrogène ou un halogène,

$Y_2$ représente un hydrogène, un halogène ou un trifluorométhyle,

Q représente un azote ou le groupe —CH=,

A représente un alcoyle en $C_1$ à $C_4$, un alcényle en $C_3$ à $C_4$, un alcynyle en $C_3$ à $C_4$, un alcoxyalcoyle en $C_2$ à $C_8$ ou un radical imino

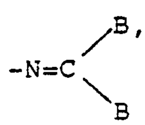

où les B représentent chacun indépendamment l'un de l'autre un alcoyle en $C_1$ à $C_4$ ou ensemble un alcoylène en $C_4$ à $C_5$.

3. Agent selon la revendication 1, qui contient, outre l'acide phénylamino-oxo-acétique de formule I ou un de ses esters, comme herbicide un chloracétanilide, choisi entre 2-chloro-2',6'-diéthyl-N-(2' propyloxyéthyl)-acétanilide, 2-chloro-6'-éthyl-N-(2"-méthoxy-1"-méthyl-éthyl) acét-o-toluidide, 2-chloro-2', 6'-diéthyl-N-(butoxyméthyl) acétanilide, 2-chloro-2', 6'-diéthyl-N-(méthoxyméthyl) acétanilide.

4. Agent selon la revendication 1, qui contient, outre l'acide phénylamino-oxo-acétique de formule I ou un de ses esters, comme herbicide un composé de triazine, choisi entre 2,4-bis (éthylamino)-6-méthylthio-1,3,5-triazine, 2-(1',2'-diméthylpropylamino-4-éthylamino)-6-méthylthio-1,3,5-triazine, 2-tert.-butylamino-4-éthyl-amino-6-méthylthio-1,3,5-triazine, 2-chloro-4-tert.-butylamino-6-éthylamino-1,2,5-triazine.

5. Agent selon la revendication 1, qui contient, outre l'acide phénylamino-oxo-acétique de formule I ou un de ses esters, comme herbicide le méthylsulfate de 1,2-diméthyl-3,5-diphényl-1H-pyrazolium.

6. Agent selon la revendication 5, qui contient, outre l'acide phényl-oxo-acétique de formule I, comme herbicide le (3,5-dichlorocyanophénoxim)-ester de l'acide α-(2-chlorocyclopropyl)-propionique.

7. Agent selon la revendication 1, caractérisé en ce qu'il contient, outre l'herbicide et des additifs inertes, comme antidote un acide phénylamino-oxo-acétique ou un de ses esters de fomule I, où

$R_1$ représente un hydrogène,

$R_2$ représente un hydrogène ou un radical alcoyle en $C_1$ à $C_{18}$, alcényle en $C_3$ à $C_{18}$, alcynyle en $C_3$ à $C_6$ ou cycloalcoyle en $C_3$ à $C_8$,

$X_1$ et $X_2$ représentent chacun indépendamment l'un de l'autre un halogène ou un halogèneméthoxy ou encore l'un d'entre eux un hydrogène.

8. Agent selon la revendication 1, caractérisé en ce qu'il contient, outre l'herbicide et des additifs inertes, comme antidote un acide phénylamino-oxo-acétique de formule I ou un de ses esters, où

$R_1$ représente un hydrogène,

$R_2$ représente un radical alcoyle en $C_1$ à $C_6$, alcényle en $C_3$ à $C_6$ ou cycloalcoyle en $C_3$ à $C_8$, qui est substitué par un radical [alcoylène en $C_2$ à $C_3$-O]$_n$ R', où n vaut 1 ou 2 et R' représente un hydrogène ou un alcoyle en $C_1$ à $C_6$, ou un radical alcoylthio en $C_1$ à $C_6$, hydroxyalcoylthio en $C_1$ à $C_6$, alcoxycarbonyle en $C_1$ à $C_6$, alcoylthiocarbonyle en $C_1$ à $C_6$, alcoylcarbonyle en $C_1$ à $C_6$, amino, alcoylamino en $C_1$ à $C_6$, di-alcoylamino en $C_1$ à $C_6$, alcénylcarbonyloxy en $C_3$ à $C_{18}$, carbamoyle, alcoylcarbamoyle en $C_1$ à $C_4$, dialcoylcarbamoyle en $C_1$ à $C_4$ ou phényle, où le radical phényle de son côté peut être substitué par halogène, cyano, alcoyle en $C_1$ à $C_6$, haloalcoyle en $C_1$ à $C_6$, alcoxy en $C_1$ à $C_6$, alcoylthio en $C_1$ à $C_6$, alcoylcarbonyle en $C_1$ à $C_6$ ou nitro,

$X_1$ et $X_2$ représentent chacun indépendamment l'un de l'autre un halogène ou un halogèneméthoxy ou encore l'un d'entre eux représente également un hydrogène.

9. Agent selon la revendication 1, caractérisé en ce qu'il contient, outre l'herbicide et des additifs inertes, comme antidote un acide phénylamino-oxo-acétique de formule I ou un de ses esters, où

$R_1$ représente un hydrogène,

$R_2$ représente un radical phényl-alcynyle en $C_3$ à $C_6$, qui est non substitué ou substitué dans le noyau phényle par halogène, cyano, alcoyle en $C_1$ à $C_6$, haloalcoyle en $C_1$ à $C_6$, alcoxy en $C_1$ à $C_6$, alcoylthio en $C_1$ à $C_6$, alcoxycarbonyle en $C_1$ à $C_6$, alcoylcarbonyle en $C_1$ à $C_6$, amino, alcoylamino en $C_1$ à $C_6$, carbamoyle, alcoylcarbamoyle en $C_1$ à $C_4$, di-alcoylcarbamoyle en $C_1$ à $C_4$,

$X_1$ et $X_2$ représentent chacun indépendamment l'un de l'autre un halogène ou un halogèneméthoxy ou l'un d'entre eux représente également un hydrogène.

10. Procédé de protection des plantes cultivées contre l'action phytotoxique d'herbicides, caractérisé en ce qu'on traite les plantes cultivées avant ou après leur levée avec une quantité efficace d'un agent selon la revendication 1.

11. Procédé de protection des plantes cultivées contre l'action phytotoxique d'herbicides, caractérisé en ce qu'on traite leurs graines, tubercules ou boutures avec une quantité efficace d'un agent selon la revendication 1.

12. Procédé de protection des cultures de céréales, de riz, de maïs ou de sorgho, caractérisé en ce qu'on traite les cultures ou leurs semences simultanément ou en succession rapide avec une quantité efficace de 2-propynylester de l'acide $\alpha$-[4-(3,5-dichloropyridyl-2-oxy)-phénoxy]-propionique comme herbicide et avec une quantité efficace de méthylester de l'acide 3,4-dibromophénylamino-oxo-acétique comme antidote.

13. Procédé de lutte sélective contre les mauvaises herbes dans les cultures de plantes utiles, caractérisé en ce qu'on traite les cultures de plantes utiles, leurs surfaces cultivées ou leurs semences simultanément ou en succession rapide avec une quantité efficace d'un herbicide et d'un antidote selon la revendication 1.

14. Procédé selon la revendication 13, caractérisé en ce qu'on traite des cultures de céréales, de riz, de maïs ou de sorgho.

15. Procédé selon la revevendication 13, caractérisé en ce qu'on traite les semences et la matière de reproduction des plantes cultivées.